# EUROPÄISCHE PATENTSCHRIFT

(11) **EP 3 263 962 B1**
(45) Veröffentlichungstag und Bekanntmachung des Hinweises auf die Patenterteilung: **27.11.2019**
(21) Anmeldenummer: 17177809.5
(22) Anmeldetag: 26.06.2017
(51) Int. Cl.: F16K 31/06, F16K 39/02, H01F 7/16

(54) **VENTIL**
VALVE
SOUPAPE

(30) Priorität: 27.06.2016 DE 102016211516
(43) Veröffentlichungstag der Anmeldung: 03.01.2018
(73) Patentinhaber: Staiger GmbH & Co. KG, 74391 Erligheim (DE)
(72) Erfinder: Staiger, Marc, 71634 Ludwigsburg (DE); Mozer, Marcel, 74372 Sersheim (DE); Kofink, Peter, 74182 Obersulm (DE)
(74) Vertreter: Kordel, Mattias

(56) Entgegenhaltungen:
- EP-A1- 0 928 892
- DE-A1- 19 607 810

## Beschreibung

Die Erfindung betrifft ein Ventil für flüssige oder gasförmige Medien gemäß Oberbegriff des Anspruchs 1.

Ventile der hier angesprochenen Art sind bekannt (DE 10 2011 105 586 B1, EP 0 928 892 A1, DE 196 07 810 A1). Sie weisen einen Ventilkörper auf, der eine Ventilkammer umfasst, welche mit mindestens einem Einlass und mit wenigstens einem Auslass in Fluidverbindung bringbar ist, außerdem eine in eine erste und zweite Funktionsstellung verlagerbare Ventileinrichtung, welche die Fluidverbindung zwischen dem mindestens einen Einlass und einer Ventilkammer in der ersten Funktionsstellung unterbindet und in der zweiten Funktionsstellung freigibt, wobei die Ventileinrichtung zum Verschließen des mindestens einen Einlasses in der ersten Funktionsstellung ein gegen einen Ventilsitz dichtend andrückbares Dichtelement aufweist. Das Ventil umfasst außerdem ein Vorspannelement, welches eine Vorspannkraft auf die Ventileinrichtung ausübt und diese in ihre erste Funktionsstellung drängt. Schließlich weist das Ventil einen mit der Ventileinrichtung zusammenwirkenden Antrieb auf, der dazu dient, die Ventileinrichtung zu verlagern und diese zumindest in die beiden Funktionsstellungen zu bringen, um einen Medienstrom aus dem Einlass zum Auslass zu ermöglichen und zu unterbinden. Das Vorspannelement muss so hohe Kräfte auf die Ventileinrichtung ausüben, dass diese die Fluidverbindung zwischen dem mindestens einen Einlass und der Ventilkammer in der ersten Funktionsstellung unterbindet. Der in dem Einlass herrschende Druck wirkt auf die Ventileinrichtung derart, dass diese bei einer zu geringen Vorspannkraft von dem Ventilsitz abgehoben wird, sodass das im Einlass vorhandene Medium in die Ventilkammer und von dort zum Auslass gelangen kann. Um eine hohe Funktionssicherheit des Ventils zu gewährleisten, wird das Vorspannelement so ausgelegt, dass ein ungewolltes Abheben der Ventileinrichtung vom Ventilsitz und damit ein unerwünschter Austritt von einem im Einlass vorhandenen Medium mit hoher Sicherheit verhindert werden. Die Ventileinrichtung wird bei einer derartigen Auslegung mit einer relativ hohen Vorspannkraft gegen den Ventilsitz angedrückt. Dies hat zur Konsequenz, dass die zum Öffnen des Ventils, also zum Abheben der Ventileinrichtung von dem Ventilsitz, erforderlichen Kräfte, die von dem Antrieb aufzubringen sind, sehr hoch sein müssen. Dies wirkt sich nachteilig auf das Öffnungsverhalten des Ventils aus, weil die hohen Kräfte aufgebracht werden müssen, sodass ein starker und damit teurer Antrieb erforderlich ist.

Der Erfindung liegt die Aufgabe zugrunde, ein Ventil zu schaffen, welches die genannten Nachteile nicht aufweist.

Die Aufgabe wird gelöst, indem ein Ventil mit den Merkmalen des Anspruchs 1 geschaffen wird. Vorteilhafte Ausgestaltungen ergeben sich aus den Unteransprüchen.

Zur Lösung der Aufgabe wird insbesondere ein Ventil der oben angesprochenen Art vorgeschlagen, bei dem die zum Öffnen des Einlasses, also zum Abheben des Dichtelements vom Ventilsitz erforderlichen Kräfte reduziert sind.

Zur Lösung der Aufgabe wird insbesondere ein Ventil für flüssige und gasförmige Medien vorgeschlagen, welches einen Ventilkörper mit einer Ventilkammer umfasst. Diese ist mit wenigstens einem Einlass und wenigstens einem Auslass in Fluidverbindung bringbar. Die Anzahl der Einlässe und Auslässe kann beispielsweise in Abhängigkeit davon gewählt werden, wie groß die von dem Ventil zu beeinflussenden Medienströme sind. Bei einer großen Durchflussrate kann beispielsweise ein Einlass mit einem relativ großen Strömungsquerschnitt und einer Anzahl von Auslässen gewählt werden, deren einzelne Innendurchmesser zusammengenommen eine gewünschte Auslassströmung ermöglichen. Das hier angesprochene Ventil weist eine in eine erste und zweite Funktionsstellung verlagerbare Ventileinrichtung auf, welche die Fluidverbindung zwischen dem mindestens einen Einlass und der Ventilkammer in einer ersten Funktionsstellung unterbindet und in einer zweiten Funktionsstellung freigibt. Die Ventileinrichtung weist dazu zum Verschließen des Einlasses in der ersten Funktionsstellung ein gegen einen Ventilsitz dichtend andrückbares Dichtelement auf. Dabei kann das hier angesprochene Ventil so ausgelegt werden, dass bei mehreren Einlässen mehrere Dichtelemente vorgesehen werden, die auf zugehörige Ventilsitze dichtend andrückbar sind. Vorzugsweise ist das Ventil so ausgelegt, dass in dem Ventilkörper ein einziger Einlass mit einem Querschnitt vorgesehen ist, der auf den gewünschten Durchfluss ausgelegt ist. In diesem Fall weist der Einlass einen Ventilsitz auf, gegen welchen ein Dichtelement dichtend andrückbar ist. Die Querschnitte und Anzahl der Auslässe werden so festgelegt, dass diese den gewünschten Fluidstrom ermöglichen.

Das hier angesprochene Ventil weist ein Vorspannelement auf, welches die Ventileinrichtung mit einer Vorspannkraft derart beaufschlagt, dass diese in ihre erste Funktionsstellung gedrängt wird. Schließlich weist das Ventil einen Antrieb auf, welcher derart mit der Ventileinrichtung zusammenwirkt, dass diese durch den Antrieb verlagerbar ist. Das erfindungsgemäße Ventil weist ein elastisches Druckausgleichselement auf, welches einerseits mit der Ventileinrichtung und andererseits mit dem Ventilkörper dichtend derart gekoppelt ist, dass es die Ventilkammer gegen eine über einen Fluidpfad mit dem mindestens einen Einlass verbundene Druckausgleichkammer abgrenzt. Das Druckausgleichselement wird dadurch einerseits mit dem in dem wenigstens einen Auslass herrschenden Druck beaufschlagt, andererseits mit dem Druck in der Ausgleichskammer, also mit dem am Einlass herrschenden Druck. Dabei wirkt der im Auslass herrschende Druck derart, dass die Anpresskraft, mit der das Dichtelement der Ventileinrichtung an den Ventilsitz angedrückt wird, reduziert wird. Dagegen erhöht der im Einlass beziehungsweise in der Druckausgleichskammer herrschende Druck die Anpresskraft. Das Ventil ist dabei so ausgelegt, dass die am Ventilsitz mit dem im Einlass herrschenden Druck beaufschlagte Fläche der Ventileinrichtung im Wesentlichen der Fläche des Druckausgleichselements entspricht, welche mit dem in der Druckausgleichskammer beziehungsweise dem Einlass herrschenden Druck beaufschlagt wird.

Wenn allein der im Einlass herrschende Druck von einer Seite aus auf die Ventileinrichtung wirken würde, so würde die Anpresskraft, mit der das Dichtelement der Ventileinrichtung an den Ventilsitz angedrückt wird, reduziert. Der am Einlass herrschende Druck wirkt jedoch über den Fluidpfad auch in der Druckausgleichskammer und damit auf das Druckausgleichselement. Dieses übt daraufhin eine Kraft auf die Ventileinrichtung und auf dessen Dichtelement aus, sodass dieses an den Ventilsitz angedrückt wird. Wenn also die wirksamen Flächen, die im Bereich des Ventilsitzes und im Bereich der Druckausgleichskammer mit dem Einlassdruck beaufschlagt werden, im Wesentlichen gleich groß sind, braucht das Vorspannelement lediglich eine zusätzliche Vorspannkraft aufzubringen, welche die Ventileinrichtung in ihre erste Funktionsstellung drängt. Die Vorspannkraft muss also nicht dem im Einlass herrschenden Druck entgegenwirken, weil dieser mittels des Druckausgleichselements und durch den Druck in der Druckausgleichskammer kompensiert wird. Dazu ist, wie erläutert, vorgesehen, dass der auf das Druckausgleichselement über die Druckausgleichskammer wirkende Druck eine Kraft aufbaut, die von dem Druckausgleichselement auf die Ventileinrichtung derart übertragen wird, dass diese gegen den Ventilsitz angedrückt wird.

In der Praxis ist das Druckausgleichselement derart an der Ventileinrichtung befestigt, dass auch noch ein Flächenanteil der Ventileinrichtung selbst gegeben ist, der mit dem in der Druckausgleichskammer vorhandenen Druck mit einer Kraft beaufschlagt wird, welche die Ventileinrichtung und damit das Dichtelement gegen den Ventilsitz andrückt. Diese Fläche wird möglichst klein gewählt und hängt davon ab, wie das Druckausgleichselement an der Ventileinrichtung angebracht ist. Daher wird hier die Aussage getroffen, dass die am Ventilsitz mit dem im Einlass herrschenden Druck beaufschlagte Fläche des Ventilelements im Wesentlichen der Fläche des Druckausgleichselements entspricht, die mit dem in der Druckausgleichskammer herrschenden Druck beaufschlagt wird. Ein kompletter Ausgleich der durch den Druck im Einlass aufgebauten Kräfte ist nur möglich, wenn die oben erörterten Druckkräfte, die auf die Ventileinrichtung selbst wirken, berücksichtigt werden, und ist in der Praxis nicht zwingend erforderlich, weil bei einer Dimensionierung des Ventils, bei der die druckbeaufschlagten Flächen im Wesentlichen gleich sind, bereits eine deutliche Reduktion der von dem Vorspannelement aufzubringenden und auf die Ventileinrichtung wirkenden Vorspannkraft gegeben ist.

Ein exakter Ausgleich der über den wenigstens einen Einlass und über die Druckkammer auf das Ventilelement wirkenden Kräfte durch Abstimmung der genannten Flächen ist auch deshalb nicht immer angestrebt, weil vorzugsweise die Materialeigenschaften des Druckausgleichselements und gegebenenfalls auch die des Vorspannelements bei der Auslegung des Ventils berücksichtigt werden. Es hat sich nämlich gezeigt, dass die Kräfte, die der Antrieb zum Abheben des Dichtelements vom Ventilsitz aufbringen muss, von der Steifigkeit des Druckausgleichselements sowie des Vorspannelements abhängen. Wird hier eine hohe Steifigkeit realisiert, bedarf es zur Verlagerung der Ventileinrichtung derart, dass das Dichtelement vom Ventilsitz abgehoben wird, hoher Kräfte. In diesem Fall wird vorzugsweise die wirksame Fläche, auf welche der in der Druckausgleichskammer vorhandene Druck von oben auf das Druckausgleichselement wirkt, reduziert, damit die Kräfte, welche das Dichtelement gegen den Ventilsitz andrücken, nicht so groß sind und der Antrieb nicht so stark ausgelegt werden muss, die hohe Steifigkeit des Vorspannelements und/oder des Druckausgleichselements zu überwinden.

Entscheidend ist bei der Auslegung des Ventils, dass ein Druckausgleich geschaffen wird, indem die durch den Druck im Einlass auf das Ventilelement ausgeübten Kräfte möglichst im Wesentlichen derart durch Kräfte ausgeglichen werden, die durch den Druck in der Druckausgleichskammer aufgebaut werden. Dadurch ist es möglich, das Vorspannelement derart auszulegen, dass die Vorspannkräfte, welche das Ventilelement auf den Ventilsitz drücken, reduziert sind, damit auch die Kräfte, die der Antrieb aufbringen muss, um das Ventilelement aus der ersten dichtenden Funktionsstellung in die zweite Funktionsstellung zu verlagern, in welcher der Ventilsitz freigegeben ist.

Es ist möglich, dass das Druckausgleichselement derart an der Ventileinrichtung und/oder am Ventilkörper festgelegt ist, dass die mit dem Druck der Druckausgleichskammer beaufschlagte Fläche des Druckausgleichselements sich bei einer Verlagerung der Ventileinrichtung von der ersten in die zweite Funktionsstellung und von der zweiten in die erste Funktionsstellung nicht ändert. Dies würde nämlich dazu führen, dass sich die Druckverhältnisse und damit die auf die Ventileinrichtung wirkenden Kräfte ändern würden.

Dies kann insbesondere erreicht werden, indem das Druckausgleichselement insbesondere oberseitig, das heißt auf einer dem Ventilsitz abgewandten Seite, so abgestützt wird, dass sich bei einer Verlagerung der Ventileinrichtung von der ersten Funktionsstellung in die zweite Funktionsstellung und zurück kein Spalt ergibt, der die mit dem Druck der Druckausgleichskammer beaufschlagte Fläche vergrößern würde. Hierzu kann insbesondere ein oberseitig des Druckausgleichselements, also auf der dem Ventilsitz abgewandten Seite, angeordneter Ring vorgesehen sein, an dem sich das Druckausgleichselement insbesondere bei seiner Verlagerung von der ersten Funktionsstellung in die zweite Funktionsstellung und zurück abstützt.

Alternativ ist es möglich, dass das Druckausgleichselement derart an der Ventileinrichtung und/oder am Ventilkörper festgelegt ist, dass die mit dem Druck der Ventilkammer beaufschlagte Fläche des Druckausgleichselements sich bei einer Verlagerung der Ventileinrichtung von der ersten in die zweite Funktionsstellung und von der zweiten in die erste Funktionsstellung nicht ändert.

Dies kann ebenfalls insbesondere durch eine geeignete Abstützung des Druckausgleichselements verwirklicht werden, die insbesondere eine Spaltbildung bei der Verlagerung der Ventileinrichtung verhindert, wobei diese insbesondere in Form eines unterseitig des Druckausgleichselements vorgesehenen Rings ausgebildet sein kann, wobei dieser unterseitige Ring auf der dem Ventilsitz zugewandten Seite des Druckausgleichselements angeordnet ist. Das Druckausgleichselement kann sich dann bei seiner Verlagerung von der ersten Funktionsstellung in die zweite Funktionsstellung und zurück an dem unterseitigen Ring abstützen.

Ist sowohl eine oberseitige Abstützung als auch eine unterseitige Abstützung für das Druckausgleichselement vorgesehen, und reichen diese Abstützungen - in radialer Richtung, also senkrecht zu einer Mittelachse oder Mittellinie des Ventils gesehen - in Richtung auf die Mittellinie zu bis zu einem gleichen Radius, bleiben - in nicht zur Erfindung gehörender Weise - bei der Verlagerung der Ventileinrichtung von der ersten in die zweite Funktionsstellung und zurück sowohl die mit dem Druck der Druckausgleichskammer als auch die mit dem Druck der Ventilkammer beaufschlagte Fläche des Druckausgleichselements konstant. Überragt dagegen eine der beiden Abstützungen die andere der beiden Abstützungen in radialer Richtung nach innen, bleibt lediglich die Fläche des Druckausgleichselements auf derjenigen Seite desselben konstant, auf welcher die radial weniger weit nach innen in Richtung der Mittellinie reichende Abstützung vorgesehen ist. Auf der anderen Seite bildet sich nämlich bei der Verlagerung des Druckausgleichselements ein Spalt, wenn das Druckausgleichselement von der entsprechenden Abstützung weg verformt wird.

Sind die oberseitige Abstützung und die unterseitige Abstützung in Form von Ringen vorgesehen, können diese Ringe insbesondere gleiche Innendurchmesser aufweisen, wobei sich dann für beide druckbeaufschlagten Flächen des Druckausgleichselements - in nicht zur Erfindung gehörender Weise - keine Änderung bei der Verlagerung der Ventileinrichtung von der ersten Funktionsstellung in die zweite Funktionsstellung und zurück ergibt. Weist dagegen einer der beiden Ringe einen kleineren Innendurchmesser auf als der andere, ist nur diejenige druckbeaufschlagte Fläche des Druckausgleichselements bei der Verlagerung der Ventileinrichtung unverändert, welche auf der Seite des Ringes mit dem größeren Innendurchmesser angeordnet ist.

Erfindungsgemäß ist vorgesehen, dass das Druckausgleichselement derart an der Ventileinrichtung und/oder am Ventilkörper festgelegt ist, dass sich die mit dem Druck der Druckausgleichskammer und/oder der Ventilkammer beaufschlagten Flächen des Druckausgleichselements zumindest bei einer Verlagerung der Ventileinrichtung von der zweiten Funktionsstellung in die erste Funktionsstellung so ändern, dass die mit dem Druck der Druckausgleichskammer beaufschlagte Fläche - geringfügig - größer wird als die mit dem Druck der Ventilkammer beaufschlagte Fläche. Insbesondere ist bevorzugt vorgesehen, dass sich die mit dem Druck der Druckausgleichskammer beaufschlagte Fläche - insbesondere im Vergleich zu ihrer Größe in der zweiten Funktionsstellung - vergrößert. Dies führt in vorteilhafter Weise zu einer zusätzlichen Kraft, welche das Ventilelement in der ersten Funktionsstellung gegen den Ventilsitz drängt.

Dies kann insbesondere erreicht werden, indem das Druckausgleichselement oberseitig, das heißt auf der dem Ventilsitz abgewandten Seite, so abgestützt wird, dass sich bei einer Verlagerung der Ventileinrichtung von der zweiten Funktionsstellung in die erste Funktionsstellung ein Spalt ergibt, der die mit dem Druck der Druckausgleichskammer beaufschlagte Fläche vergrößert. Hierzu kann insbesondere ein oberseitig des Druckausgleichselements, also auf der dem Ventilsitz abgewandten Seite, angeordneter Ring, an dem sich das Druckausgleichselement abstützt, einen kleineren Innendurchmesser aufweisen als ein entsprechender, unterseitig des Druckausgleichselements vorgesehener Ring. Das Druckausgleichselement ist in der ersten Funktionsstellung zumindest geringfügig derart in Richtung der unterseitigen Abstützung verformt, dass sich im Bereich der oberseitigen Abstützung ein Spalt ergibt, durch den die mit dem Druck der Druckausgleichskammer beaufschlagte Fläche vergrößert ist.

Der angestrebte Druckausgleich, der durch Abstimmung der mit dem Einlassdruck beaufschlagten Flächen, gegebenenfalls unter Berücksichtigung der Steifigkeit des Druckausgleichselements beziehungsweise des Vorspannelements, erreicht wird, erlaubt es, auch größere Innendurchmesser des Einlasses, also größere Nennweiten, und damit größere Volumenströme zu realisieren, ohne dass eine Veränderung des grundsätzlichen Aufbaus des Ventils und des Antriebs erforderlich wäre.

Das Ventil kann grundsätzlich manuell, hydraulisch oder beispielsweise mit Druckluft betrieben werden, der Antrieb ist also auf verschiedene Weise auslegbar. Bevorzugt ist jedoch vorgesehen, dass der Antrieb mindestens einen Elektromagneten sowie wenigstens einen mit diesem zusammenwirkenden Anker aufweist, welcher auf die Ventileinrichtung einwirkt. Dabei ist vorgesehen, dass der Anker Kräfte auf die Ventileinrichtung ausübt, welche den Vorspannkräften des Vorspannelements entgegenwirken. Es zeigt sich, dass durch den hier erläuterten Druckausgleich die auf die Ventileinrichtung aufzubauenden Kräfte reduziert sind, die zum Abheben der Ventileinrichtung beziehungsweise des Dichtelements vom Ventilsitz erforderlich sind.

Bevorzugt ist es möglich, dass durch die auf den Anker wirkenden Kräfte die Ventileinrichtung mittels des Elektromagneten gegen die Kraft des Vorspannelements zumindest in die zweite Funktionsstellung verlagerbar ist.

Das Druckausgleichselement gewährleistet eine fluiddichte Trennung zwischen der Ventilkammer und der Druckausgleichskammer. Es ist also ein dichter Abschluss der Druckausgleichskammer gegenüber der Ventilkammer sichergestellt. Die Elastizität des Druckausgleichselements wurde bereits angesprochen. Da das Druckausgleichselement zum einen an dem Ventilkörper und zum anderen an der Ventileinrichtung dichtend gekoppelt ist, und weil das Ventilelement gegenüber dem Ventilkörper in eine erste und zweite Funktionsstellung verlagerbar sein muss, muss die Elastizität des Druckausgleichselements derart ausgelegt sein, dass diese durch den Antrieb bewirkte Relativbewegung zwischen dem Ventilkörper und der Ventileinrichtung ungehindert möglich ist. Vorzugsweise ist daher vorgesehen, dass das Druckausgleichselement Metall und/oder Kunststoff aufweist oder aus diesen Materialien hergestellt ist. Das Druckausgleichselement realisiert eine Membran zwischen der Druckausgleichskammer und dem Ventilraum. Für den Fall, dass das Druckausgleichselement aus Kunststoff hergestellt ist, kann vorgesehen werden, dass das Kunststoffmaterial durch Fasern und/oder durch ein Fasergeflecht und/oder durch ein Fasergewirk verstärkt wird. Vorzugsweise weist die Membran ein als Viton bezeichnetes Fluorelastomer oder EPDM (Ethylen-Propylen-Dien-Kautschuk) auf oder besteht aus diesen Materialien. Bei der Wahl des Materials zur Realisierung des Druckausgleichselements ist von entscheidender Bedeutung, dass dieses resistent ist gegen die flüssigen oder gasförmigen Medien, die durch das Ventil geleitet werden.

Bei einem besonders bevorzugten Ausführungsbeispiel des Ventils ist vorgesehen, dass das Druckausgleichselement zumindest in dem Bereich, in dem es am Ventilkörper und/oder an der Ventileinrichtung festgelegt ist, eine Verstärkung oder mindestens einen Ring aufweist. Es ist also möglich, das Druckausgleichselement in den Festlegungsbereichen mit einer größeren Dicke und einer größeren Steifigkeit zu versehen, sodass eine Verstärkung realisiert wird. Möglich ist es auch, das Druckausgleichselement an mindestens einem Ring zu befestigen und diesen dann am Ventilkörper und/oder an der Ventileinrichtung festzulegen.

Bei einem bevorzugten Ausführungsbeispiel des Ventils ist vorgesehen, dass an dem Druckausgleichselement oberseitig, also auf einer dem Ventilsitz abgewandten Seite, ein Oberring angeordnet ist, wobei auf der Unterseite des Druckausgleichselements, das heißt auf der dem Ventilsitz zugewandten Seite, ein Unterring angeordnet ist. Der Oberring und der Unterring weisen jeweils einen Innendurchmesser auf, sodass deren innere Umrandungen von der Ventileinrichtung - in radialer Richtung gesehen - beabstandet sind. Dabei ist es möglich, dass die Innendurchmesser des Oberrings und des Unterrings gleich groß sind. In diesem Fall ändern sich die mit dem Druck der Druckausgleichskammer und der Ventilkammer beaufschlagten Flächen des Druckausgleichselements bei einer Verlagerung der Ventileinrichtung von der ersten Funktionsstellung in die zweite Funktionsstellung und zurück nicht. Es ist aber auch möglich, dass der Unterring und der Oberring verschiedene Innendurchmesser aufweisen. In diesem Fall ändert sich bei der Verlagerung der Ventileinrichtung von der ersten Funktionsstellung in die zweite Funktionsstellung und zurück insbesondere diejenige Fläche des Druckausgleichselements, welche demjenigen Ring, ausgewählt aus dem Oberring und dem Unterring, zugeordnet ist, der den kleineren Innendurchmesser aufweist.

Besonders bevorzugt wird ein Ausführungsbeispiel, bei dem der Unterring einen größeren Innendurchmesser aufweist als der Oberring. Hieraus ergibt sich der Vorteil, dass die über dem Druckausgleichselement abfallende Druckkräftedifferenz in der ersten Funktionsstellung bei leicht in Richtung des Unterrings verformtem Druckausgleichselement zu Gunsten der durch den Druck in der Druckausgleichskammer auf das Druckausgleichselement ausgeübten Druckkräfte verschoben wird, da die mit dem Druck in der Druckausgleichskammer beaufschlagte Fläche im Vergleich zu der mit dem Druck in der Ventilkammer beaufschlagten Fläche des Druckausgleichselements durch Spaltbildung am Oberring etwas vergrößert ist. Hierdurch ergibt sich eine zusätzliche, in Richtung auf den Ventilsitz hin wirkende Kraft auf das Druckausgleichselement und damit zugleich auf die Ventileinrichtung, sodass die Dichtwirkung des Ventils unterstützt wird.

Insbesondere dann, wenn die Differenz der Innendurchmesser zwischen dem Oberring und dem Unterring nicht zu groß gewählt wird, ist die Änderung der sich bei der Verlagerung der Ventileinrichtung ändernden druckbeaufschlagten Fläche, hier insbesondere der mit dem Druck der Druckausgleichskammer beaufschlagten Fläche, vernachlässigbar, sodass sich auch diese druckbeaufschlagte Fläche bei der Verlagerung der Ventileinrichtung nur geringfügig oder unwesentlich ändert beziehungsweise im Wesentlichen nicht ändert oder zumindest nicht wesentlich ändert.

Vorzugsweise ist vorgesehen, dass das Druckausgleichselement sowohl im Bereich der Festlegung an dem Ventilkörper als auch im Bereich der Festlegung an der Ventileinrichtung eine Verstärkung oder einen Ring aufweist. Damit ist in beiden Bereichen der Festlegung sichergestellt, dass sich die mit Druck beaufschlagte Fläche bei einer Relativverlagerung zwischen der Ventileinrichtung und dem Ventilkörper nicht oder in vorbestimmter Weise ändert.

Bei einem bevorzugten Ausführungsbeispiel des Ventils ist vorgesehen, dass das Ventilelement einen Grundkörper aufweist, an den das Dichtelement und/oder das Druckausgleichselement und/oder das Vorspannelement und/oder der Anker anbringbar sind/ist. Besonders bevorzugt wird ein Ausführungsbeispiel des Ventils, bei dem der Grundkörper so ausgebildet ist, dass das Dichtelement, das Druckausgleichselement, das Vorspannelement und auch der Anker an diesem befestigbar sind. Es wird dadurch ein Modul oder eine Montageeinheit geschaffen, die in den Ventilkörper eines Ventils einsetzbar ist. Es werden also nicht mehrere einzelne Teile in den Ventilkörper eingebracht und dort fixiert, sondern vorzugsweise die hier angesprochene Montageeinheit, die dann, wie unten beschrieben werden wird, an dem Ventilkörper festgelegt wird.

Bei einem weiteren bevorzugten Ausführungsbeispiel des Ventils ist vorgesehen, dass der Fluidpfad zwischen dem mindestens einen Einlass und der Druckausgleichskammer durch den Grundkörper des Ventilelements verläuft. Es ist also nicht erforderlich, den Fluidpfad auf irgendeine Weise im Ventilkörper des Ventils oder dergleichen zu realisieren. Durch Einsetzen des Ventilelements mit dem Grundkörper, der das Dichtelement, das Druckausgleichselement, das Vorspannelement und den Anker umfasst, ist bereits die Druckverbindung zwischen dem Einlass des Ventils und der Druckausgleichskammer durch den Fluidpfad realisiert. Es ergibt sich damit eine sehr kompakte Bauweise. Die Herstellungskosten sind bei dieser Art der Realisierung des Fluidpfads darüber hinaus relativ gering.

Alternativ ist bevorzugt vorgesehen, dass der Fluidpfad zwischen dem mindestens einen Einlass und der Druckausgleichskammer als axiale Sacklochbohrung in dem Grundkörper der Ventileinrichtung ausgeführt ist, wobei die axiale Sacklochbohrung mit einer radialen Querbohrung in strömungstechnischer Verbindung ist, wobei die radiale Querbohrung in die Druckausgleichskammer mündet, und wobei die axiale Sacklochbohrung an ihrem der radialen Querbohrung abgewandten Ende in den Einlass mündet. Die axiale Sacklochbohrung erstreckt sich bevorzugt nicht bis in den Anker. Der Anker ist in diesem Fall bevorzugt nicht durchbohrt ausgebildet. Die axiale Sacklochbohrung weist ein geschlossenes Ende vorzugsweise unterhalb des Ankers auf, das heißt auf einer dem Ventilsitz zugewandten Seite des Ankers. Die radiale Querbohrung verläuft - insbesondere auf Höhe des geschlossenen Endes der axialen Sacklochbohrung - bevorzugt unterhalb des Ankers. Auf diese Weise muss sich der Fluidpfad nicht vollständig durch den Grundkörper und insbesondere nicht durch den Anker erstrecken, sodass der Anker unbeschädigt und insbesondere nicht durchbohrt ausgebildet sein kann, wodurch er bessere magnetische Eigenschaften aufweist.

Besonders bevorzugt wird schließlich ein Ventil, das als Proportionalventil ausgebildet ist. Es ist also derart ausgelegt, dass das Ventilelement innerhalb des Ventilkörpers nicht nur in eine erste Funktionsstellung und eine zweite Funktionsstellung beziehungsweise umgekehrt verlagert werden kann, sondern auch in zwischen diesen beiden Funktionsstellungen gegebene Positionen des Ventilelements gegenüber dem Ventilkörper. Auf diese Weise ist es möglich, den Durchfluss durch das Ventil vorzugeben und auf einfache Weise auf definierte Werte festzulegen.

Die Erfindung wird im Folgenden anhand der Zeichnung näher erläutert. Es zeigen:
- Figur 1: ein erstes Ausführungsbeispiel eines Ventils im Längsschnitt;
- Figur 2: ein zweites Ausführungsbeispiel eines Ventils im Längsschnitt und
- Figur 3: ein drittes Ausführungsbeispiel eines Ventils im Längsschnitt.

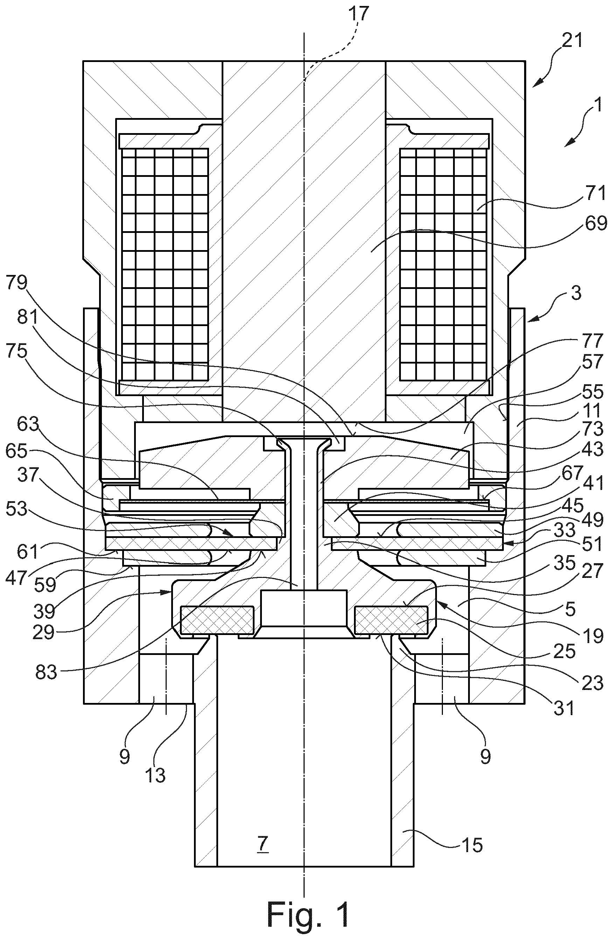

Das in Figur 1 im Längsschnitt wiedergegebene Ventil 1 weist einen vorzugsweise zylindrischen Ventilkörper 3 mit einer Ventilkammer 5 auf, welche mit mindestens einem, hier mit einem einzigen Einlass 7 und mit wenigstens einem Auslass 9 in Fluidverbindung bringbar ist. Das hier dargestellte Ausführungsbeispiel weist beispielhaft insgesamt zwölf Auslässe auf, von denen hier zwei diametral gegenüberliegende identisch ausgebildete Auslässe 9 ersichtlich sind, sodass die Bezugsziffern nicht unterschieden werden. Der Ventilkörper 3 weist eine vorzugsweise zylindrische Wand 11 auf, welche die Ventilkammer 5 umgibt und an ihrer Unterseite einen Boden 13 umschließt, in welchen der mindestens eine Auslass 9 eingebracht ist. Hier sind in den Boden 13 mindestens zwei diametral gegenüberliegende Bohrungen eingebracht, welche den mindestens einen Auslass beziehungsweise die Auslässe 9 bilden. Die Anzahl der in dem Boden 3 vorgesehenen Auslässe 9 und/oder deren Querschnittsform und/oder -fläche ist an den Verwendungszweck des Ventils 1, insbesondere an die durch das Ventil 1 strömenden Medienbeziehungsweise Volumenströmeanpassbar, welches dafür ausgelegt ist, flüssige oder gasförmige Medien zu beeinflussen.

Es sei hier ausdrücklich darauf hingewiesen, dass der mindestens eine Auslass 9 auch durch die Wand 11 verlaufen kann, also senkrecht zu dem hier dargestellten mindestens einen Auslass 9, der bei einer derartigen Ausführungsform des Ventils 1 entfallen kann.

Das hier dargestellte erste Ausführungsbeispiel des Ventils 1 zeichnet sich dadurch aus, dass der mindestens eine Einlass 7 und der mindestens eine Auslass 9 durch den Boden 13 verlaufen, wobei der Einlass 7 durch einen vom Boden 13 ausgehenden Fortsatz 15 verläuft, der nach unten über den Boden 13 hervorspringt und vorzugsweise ebenfalls zylindrisch ausgebildet ist. Die Wand 11 und der Fortsatz 15 sind hier konzentrisch zu einer gedachten Mittellinie 17 angeordnet. Vorzugsweise ist der mindestens eine Auslass 9 in dem Boden 13 in einem Bereich vorgesehen, der, von der Mittalachse 17 aus gesehen außerhalb des Fortsatzes 15 angeordnet ist, also in einem Bereich des Bodens 13, der zwischen der Außenwand des Fortsatzes 15 und dem radial äußeren Ende des Bodens 13. Wenn mehr als ein Auslass 9 vorgesehen ist, werden diese vorzugsweise auf einer gedachten Kreislinie um die Mittellinie 17 angeordnet, vorzugsweise in gleichen Abständen voneinander. Der lichte Querschnitt des Einlasses 7 und der lichte Querschnitt des mindestens einen Auslasses 9 sind so aufeinander abgestimmt, dass sich ein gewünschter Medien- beziehungsweise Volumenstrom realisieren lässt. Der mindestens eine Auslass 9 kann einen kreisrunden Querschnitt aufweisen. Denkbar ist es auch, dass in den Boden 13 um den Fortsatz 15 herum ringsegmentförmige Öffnungen realisiert werden, deren Querschnitt vorzugsweise auf den Querschnitt des Einlasses 7 abgestimmt ist. Selbstverständlich ist es möglich, auch mehr als eine ringsegmentförmige Öffnung in den Boden 13 einzubringen, um mehrere Auslässe 9 zu verwirklichen.

Das Ventil 1 weist eine Ventileinrichtung 19 auf, welche innerhalb der Wand 11 des Ventilkörpers 3 angeordnet ist. Sie kann in verschiedene Funktionsstellungen gebracht werden, von denen hier eine erste Funktionsstellung dargestellt ist. In dieser verschließt die Ventileinrichtung 19 die Fluidverbindung zwischen dem Einlass 7 und der Ventilkammer 5. Die Ventileinrichtung 19 kann durch einen Antrieb 21 aus der hier dargestellten ersten Funktionsstellung nach oben, bei dem hier dargestellten Ausführungsbeispiel entlang der Mittelachse 17, verlagert werden, sodass sie von dem Einlass 7 abhebt. Dadurch wird eine Fluidverbindung zwischen dem Einlass 7 und der Ventilkammer 5 freigegeben. Die vollständig abgehobene Funktionsstellung wird als zweite Funktionsstellung bezeichnet.

Der Fortsatz 15 ragt nicht nur nach unten über den Boden 13 hinaus, sondern auch über diesen in die Ventilkammer 5 hinein, sodass hier ein Ventilsitz 23 realisiert wird, auf welchem die Ventileinrichtung 19 aufliegt. Grundsätzlich ist es möglich, zumindest den auf dem Ventilsitz 23 aufliegenden Bereich der Ventileinrichtung 19 so auszubilden, dass unmittelbar durch die Auflage auf den Ventilsitz 23 ein dichtender Abschluss des Einlasses 7 gegenüber der Ventilkammer 5 realisiert wird. Die Ventileinrichtung 19 selbst kann also ein Dichtelement realisieren. Vorzugsweise ist jedoch, wie in Figur 1 dargestellt, die Ventileinrichtung 19 mit einem separaten Dichtelement 25 versehen, welches in einen Aufnahmebereich, vorzugsweise eine Aufnahmenut 27 in einem vorzugsweise zylindrischen Grundkörper 29 der Ventileinrichtung 19 eingesetzt ist. Das Dichtelement 25 ist vorzugsweise als Dichtring ausgebildet, der auf der dem Ventilsitz 23 zugewandten Seite in den Grundkörper 29 der Ventileinrichtung 19 eingelassen ist. Die Aufnahmenut 27 wird innen, das heißt auf der der Mittelachse 17 zugewandten Seite, und außen, also auf der der Mittelachse 17 abgewandten Seite, durch Wandabschnitte begrenzt, die umgebördelt sind, um das Dichtelement 25 im Grundkörper 29 zu befestigen. Selbstverständlich sind auch andere Befestigungsarten möglich, um das Dichtelement 25 im Grundkörper 29 derart zu fixieren, dass bei Auflage der Ventileinrichtung 19 auf dem ringförmigen Ventilsitz 23 ein dichtender Abschluss des Einlasses 7 gegenüber der Ventilkammer 5 gewährleistet ist.

Das Dichtelement 25 wird vorzugsweise aus einem plattenförmigen Material ausgestanzt. Es ist also auf einfache, kostengünstige Weise realisierbar. Durch die doppelte Bördelung sowohl am Außenrand des Dichtelements 25 als auch an dessen der Mittelachse 17 zugewandten Innenrand wird eine sehr einfache aber effektive Befestigung des vorzugsweise ringförmigen Dichtelements 25 im Grundkörper 29 realisiert und eine ringförmige Dichtfläche 31 geschaffen, die auf dem Ventilsitz 23 aufliegt. Dieser wird durch einen ringförmigen sich konisch nach oben verjüngenden Bereich des Fortsatzes 15 realisiert. Die Breite des ringförmigen, konzentrisch zur Mittelachse 17 angeordneten Ventilsitzes 23 wird vorzugsweise an die Materialeigenschaften des Dichtelements 25 angepasst, um bei vorgebbarem Anpressdruck des Dichtelements 25 an den Ventilsitz 23 eine auch bei einem Druck im Einlass 7 bestehende Abdichtung zu erreichen, um in der hier dargestellten ersten Funktionsstellung die Fluidverbindung zwischen Einlass 7 und Ventilkammer 5 zu unterbrechen. Bei dem hier dargestellten Ausführungsbeispiel ist der obere Rand des Fortsatzes 15 abgerundet und - im Längsschnitt gesehen - kreisbogenförmig abgerundet.

An der Ventileinrichtung 19, hier an deren Grundkörper 29, ist ein elastisches Druckausgleichselement 33 auf geeignete Art und Weise befestigt. Hier ist ein zylindrischer Abschnitt 35 des Grundkörpers 29 vorgesehen, der eine zentrale Öffnung 37 im Druckausgleichselement 33 durchdringt. Der zylindrische Abschnitt 35 erhebt sich von einer Auflagefläche 39, auf welcher das Druckausgleichselement 33 aufliegt. Grundsätzlich ist es möglich, das Druckausgleichselement 33 an der Ventileinrichtung 19 mittels einer Verklebung festzulegen. Vorzugsweise ist vorgesehen, dass das Druckausgleichselement 33 mittels eines Zwischenrings 41 gegen die Auflagefläche 39 angepresst wird und somit dichtend mit der Ventileinrichtung 19 gekoppelt ist. Der Zwischenring 41 kann auf einen zylindrischen Fortsatz 43 des Grundkörpers 29 aufgepresst oder aufgeschraubt sein. Entscheidend ist, dass er so auf den Grundkörper 29 aufgeschoben beziehungsweise aufgeschraubt werden kann, dass das Druckausgleichselement 33 an der Auflagefläche 39 dichtend fixiert wird.

Figur 1 ist zu entnehmen, dass der von der Mittellinie 17 aus gemessene Außendurchmesser der Auflagefläche 39 gleich groß ist wie der Außendurchmesser des Zwischenrings 41.

Das Druckausgleichselement 33 ist bei dem hier dargestellten Ausführungsbeispiel als Ring ausgebildet, der konzentrisch zur Mittelachse 17 angeordnet und dessen innerer Rand am Grundkörper 29 der Ventileinrichtung 19, wie beschrieben, festgelegt ist.

Der radial äußere Rand des Druckausgleichselements 33 ist dichtend am Ventilkörper 3 festgelegt oder mit diesem gekoppelt. Bei dem hier dargestellten Ausführungsbeispiel des Ventils 1 ist dem Druckausgleichselement 33 auf der Oberseite 45 einerseits und auf der Unterseite 47 andererseits jeweils ein Ring aufgelegt, wobei auf der Oberseite 45 ein Oberring 49 und auf der Unterseite 47 ein Unterring 51 auf dem Druckausgleichselement 33 aufliegen. Die Innendurchmesser des Oberrings 49 sowie des Unterringes 51 sind vorzugsweise gleich groß, sodass zwischen diesen Ringen einerseits und dem Zwischenring 41 beziehungsweise dem inneren Ende der Auflagefläche 39 andererseits ein Ringbereich des Druckausgleichselements 33 definiert wird, der nicht von dem Grundkörper 39 der Ventileinrichtung 19 oder dem Oberring 49 beziehungsweise dem Unterring 51 gestützt wird. Es wird hier also quasi oberseitig und unterseitig ein freier Ringbereich 53 des Druckausgleichselements 33 realisiert.

Es ist aber auch möglich, dass der Oberring 49 und der Unterring 51 verschieden große Innendurchmesser aufweisen. Insbesondere ist es möglich, dass der Unterring 51 einen größeren Innendurchmesser aufweist als der Oberring 49. Daraus ergibt sich der Vorteil, dass insbesondere in der ersten Funktionsstellung der Ventileinrichtung 19 durch Ausbildung eines kleinen Spalts zwischen dem Oberring 49 und dem Druckausgleichselement 33 eine zusätzliche Druckkraft in Richtung des Ventilsitzes 23 auf das Druckausgleichselement 33 und zugleich auf die Ventileinrichtung 19 ausgeübt wird, sodass die Dichtwirkung des Ventils 1 verbessert wird.

Das Druckausgleichselement 33 wird an seiner der Mittelinie 17 abgewandten Außenseite durch den Oberring 49 beziehungsweise den Unterring 51 auf der Innenfläche 55 festgelegt.

Bei dem Ausführungsbeispiel nach Figur 1 ist der Außendurchmesser des Unterrings 51 kleiner als der des Druckausgleichselements 33. Der Außendurchmesser des Oberrings 49 stimmt hier beispielhaft mit dem Außendurchmesser des Druckausgleichselements 33 überein.

Entscheidend ist, dass durch die beiden Ringe 49 und 51 das Druckausgleichselement 33 dichtend mit dem Ventilkörper 3 derart gekoppelt ist, dass durch das Druckausgleichselement 33 die Ventilkammer 5 dichtend gegenüber einer Druckausgleichskammer 57 abgegrenzt wird. Bei dem hier dargestellten Ausführungsbeispiel ist vorgesehen, dass der Ventilkörper 3 auf seiner Innenfläche 55 eine Stufenstruktur aufweist, durch die eine erste Auflagefläche 59 für den Unterring 51 sowie eine zweite Auflagefläche 61 für das Druckausgleichselement 33 geschaffen wird.

Der Unterring 51 und das Druckausgleichselement 33 werden auf die erste Auflagefläche 59 und die zweite Auflagefläche 61 aufgepresst, sodass hier eine dichtende Anlage geschaffen wird. Außerdem sind der Oberring 49 und der Unterring 51 derartig ausgebildet, dass sie unter einer elastischen Vorspannung mit ihren radialen Außenseiten an der Innenfläche 55 der Wand 11 dichtend anliegen. Das Druckausgleichselement 33 ist zwischen den beiden Ringen 49 und 51 festgeklemmt oder festgeklebt, wobei die beiden Ringe derartig stabil und steif ausgelegt sind, dass das Druckausgleichselement 33 zwischen den Ringen 49 und 51 fest eingespannt und - in Richtung der Mittelachse 17 gesehen - unbeweglich gehalten wird.

Hier sei ausdrücklich darauf hingewiesen, dass es für die Funktion des Ventils 1 lediglich entscheidend ist, dass der äußere Rand des Druckausgleichselements 33 dichtend mit dem Ventilkörper 3 gekoppelt ist. Dabei ist es möglich, dass mindestens ein Ring außen an dem Druckausgleichselement 33 vorgesehen ist, der durch Eigenspannung an der Innenfläche 55 der Wand 11 des Ventilkörpers 3 festgespannt ist. An diesem Ring kann das Druckausgleichselement 33 flächig aufgeklebt oder sonst wie befestigt werden, sodass das Druckausgleichselement 33 im Bereich des Rings nicht - in Richtung der Mittellinie 17 gesehen - nach oben oder unten ausgelenkt werden kann. Vorzugsweise ist jedoch vorgesehen, dass auf der Oberseite 45 und auf der Unterseite 47 jeweils ein Ring vorgesehen ist, die zu einer beidseitigen Abstützung des Druckausgleichselements 33 dienen. Die Außendurchmesser der beiden Ringe sowie des Druckausgleichselements können, anders als in Figur 1 dargestellt, auch gleich groß gewählt werden.

Figur 1 ist zu entnehmen, dass das Ventil 1 ein Vorspannelement 63 aufweist, welches die Ventileinrichtung 19 mit einer Vorspannkraft beaufschlagt, die dazu führt, dass die Ventileinrichtung 19 an den Ventilsitz 23 angepresst und damit in ihre erste Funktionsstellung gebracht wird. Das Vorspannelement 63 ist am Grundkörper 29 der Ventileinrichtung 19 angebracht, hier auf den Zwischenring 41 aufgelegt. Es ist ringförmig ausgebildet und konzentrisch zur Mittellinie 17 angeordnet und insbesondere auf den zylindrischen Fortsatz 43 des Grundkörpers 29 aufgebracht.

Der Außendurchmesser des Vorspannelements 63 ist kleiner als der des Druckausgleichselements 33 und der zugehörigen Ringe 49 und 51. Figur 1 zeigt, dass von oben in den Ventilkörper 3 ein auch als Einpressbuchse bezeichneter Haltering eingebracht ist, der in Richtung der Mittellinie 17 unbeweglich festgespannt ist. Dies kann durch eine Presspassung zwischen Außenfläche des Halterings 65 und Innenfläche 55 der Wand erreicht werden, oder aber dadurch, dass der Haltering 65 mit einem Außengewinde in ein Innengewinde auf der Innenfläche 55 von oben in den Ventilkörper 3 eingeschraubt wird. Der Haltering 65 weist eine nach unten gerichtete Halteschulter 67 auf, die von oben auf dem Vorspannelement 63 anliegt und den äußeren Rand des Vorspannelements 63 nach unten auslenkt und vorspannt, um die angesprochene Vorspannkraft zu realisieren, welche die Ventileinrichtung 19 beziehungsweise das Dichtelement 25 gegen den Ventilsitz 23 andrückt, um den Einlass 7 gegenüber der Ventilkammer 5 in dieser, in Figur 1 dargestellten ersten Funktionsstellung zu verschließen. Je nachdem wie weit das Vorspannelement 63 außen gegenüber dem Auflagebereich auf dem Zwischenring 41 nach unten ausgelenkt und vorgespannt wird, ergeben sich verschiedene Vorspannkräfte. Diese sind also auf einfache Weise vorgebbar.

An der Ventileinrichtung 19 ist schließlich noch ein Betätigungselement vorgesehen, mit dem der Antrieb 21 derart zusammenwirkt, dass die Ventileinrichtung 19 aus der in Figur 1 dargestellten ersten Funktionsstellung nach oben in Richtung der Mittelachse 17 auslenkbar ist. Bei dem hier dargestellten Ausführungsbeispiel ist der Antrieb 21 als Elektromagnet ausgebildet, er weist also einen Magnetkern 69 und eine diesen umgebende Magnetspule 71 auf, die auf geeignete, bekannte Weise derart bestromt werden kann, dass in dem Magnetkern 69 ein Magnetfeld aufgebaut wird. Dieses kann mit dem Betätigungselement, das dann als Anker 73 ausgebildet ist, derart zusammenwirken, dass der Anker 73 und damit die Ventileinrichtung 19 nach oben in Richtung auf den Magnetkern 69 bewegt wird und auch an diesem anliegen kann.

Um eine Verlagerung der Ventileinrichtung 19 gegen die Vorspannkraft des Vorspannelements 63 mittels des Antriebs 21 bewirken zu können, ist das Betätigungselement, hier also der Anker 73 an der Ventileinrichtung 19 fixiert.

Vorzugsweise ist vorgesehen, dass der zylindrische Fortsatz 43 das Betätigungselement, hier den Anker 73, vollständig durchdringt und dass dessen Endbereich 75 aufweitbar ist, sodass das Betätigungselement beziehungsweise der Anker 73 gegen das Vorspannelement 63 und gegen den Zwischenring 41 angepresst wird.

Alternativ ist bevorzugt vorgesehen, dass die strömungstechnische Verbindung zwischen dem Einlass 7 und der Druckausgleichskammer 57 über eine axiale Sacklochbohrung und eine radiale Querbohrung ausgeführt ist, wobei die axiale Sacklochbohrung sich nicht bis in den Anker 73 erstreckt. Der Anker 73 ist in diesem Fall bevorzugt nicht durchbohrt ausgebildet, vielmehr verläuft die radiale Querbohrung - insbesondere auf Höhe des geschlossenen Endes der axialen Sacklochbohrung - unterhalb des Ankers 73, das heißt auf einer dem Ventilsitz 23 zugewandten Seite des Ankers 73, sodass der Anker 73 durchgehend und undurchbohrt ausgebildet sein kann. Dies verbessert dessen magnetische Eigenschaften.

Die Ventileinrichtung 19 ist aber bevorzugt als Niet ausgebildet, sodass die hier angesprochenen Elemente auf einfache Weise an dem Grundkörper 29 der Ventileinrichtung 19 anbringbar sind. Es wird auf diese Weise eine Baueinheit beziehungsweise ein Modul realisiert, welches die Ventileinrichtung 19 darstellt. Diese ist auf einfache Weise von oben in den Ventilkörper 3 einführbar, bis der Grundkörper 29, insbesondere das darin fixierte Dichtelement 25 mit seiner Dichtfläche 31 am Ventilsitz 23 aufliegt.

In einem weiteren Schritt wird mit einem geeigneten Werkzeug von oben an dem Vorspannelement 63 vorbeigegriffen und der Unterring 51 gemeinsam mit dem Druckausgleichselement 33 im Inneren des Ventilkörpers 3 gegen die erste Anlagefläche 59 angepresst. Falls, wie hier dargestellt, das Druckausgleichselement 33 nicht nur einen Unterring 51, sondern auch einen Oberring 49 aufweist, können alle drei Elemente, der Oberring 49, das Druckausgleichselement 33 sowie der Unterring 51 gemeinsam gegen die erste Anlagefläche 59 und die zweite Anlagefläche 61 derart angepresst werden, dass das Druckausgleichselement 33 lagefest und dichtend in den Ventilkörper 3 eingepresst sind.

In einem weiteren Schritt wird dann von oben der Haltering 65 eingepresst, um den radial außen liegenden Rand des Vorspannelements 63, welches vorzugsweise als Ring ausgebildet ist, nach unten gegenüber der nach dem Einsetzen der Baugruppe gegebenen Ausgangslage auszulenken und eine Vorspannkraft des Vorspannelements 33 zu realisieren. Da der Haltering 65 lagefest an der Innenfläche 55 des Ventilkörpers 3 angepresst ist, kann die Baugruppe nach Einbringen des Halterings 65 nicht mehr aus dem Ventilkörper 3 herausfallen.

Es ist nun möglich, einen beliebigen Antrieb, insbesondere auch den hier dargestellten Elektromagneten, von oben in den Ventilkörper 3 einzusetzen und einzupressen oder einzuschrauben oder auf sonstige beliebige Weise mit dem Ventilkörper 3 derart zu verbinden, dass der Antrieb 21 lagefest im Ventilkörper 3 montiert ist.

Aus Figur 1 ist ersichtlich, dass in der ersten Funktionsstellung der Ventileinrichtung 19 das Betätigungselement beziehungsweise der Anker 73 in einem Abstand zur Unterseite 77 des Magnetkerns 69 angeordnet ist, sodass die Ventileinrichtung 19 einen Verlagerungsweg entlang der Mittellinie 17 aus der ersten Funktionsstellung gemäß Figur 1 nach oben durchführen kann, bis die Ventileinrichtung 19 schließlich unten am Magnetkern 69 anliegt und ihre zweite Funktionsstellung einnimmt. In dieser Position ist die Fluidverbindung zwischen dem mindestens einen Einlass 7 und der Ventilkammer 5 freigegeben, sodass ein Medium aus dem mindestens einen Einlass 7 in die Ventilkammer 5 und von da zu dem mindestens einen Auslass 9 strömen kann.

Figur 1 ist zu entnehmen, dass der obere aufgeweitete Endbereich 75 des zylindrischen Fortsatzes 43 in einer in die Oberseite 79 des Ankers 73 eingebrachte Vertiefung 81 untergebracht ist, sodass der Endbereich 75 nicht über die Oberseite 79 vorsteht, und die Oberseite 79 in einer zweiten Funktionsstellung der Ventileinrichtung 19 an der Unterseite 77 des Magnetkerns 69 anliegen kann.

Die Ventileinrichtung 19 weist an ihrer dem Einlass 7 zugewandten Unterseite das Dichtelement 25 auf, welches auf dem Ventilsitz 23 aufliegt. Von der Unterseite der Ventileinrichtung 19 erstreckt sich durch den Grundkörper 29 ein mit dem Einlass 7 in Fluidverbindung stehender Fluidpfad 83, der sich bis zu dem oberen Endbereich 75 des zylindrischen Fortsatzes 43 der Ventileinrichtung 19 erstreckt, sodass eine Fluidverbindung zu der Druckausgleichskammer 57 ergibt. Das in dem Einlass 7 vorhandene gasförmige oder flüssige Medium kann also von dem Einlass 7 über den Fluidpfad 83 bis in die Druckausgleichskammer 57 gelangen. Das Vorspannelement 63 ist mit mindestens einer Öffnung versehen, sodass das Medium durch das Vorspannelement 63 bis zum Druckausgleichselement 33 gelangen kann.

Gemäß einem anderen bevorzugten Ausführungsbeispiel ist der Fluidpfad 83, mithin die strömungstechnische Verbindung zwischen dem Einlass 7 und der Druckausgleichskammer 57, nicht als gerade, axiale Durchgangsbohrung verwirklicht. Vielmehr umfasst der Fluidpfad 83 bevorzugt eine axiale Sacklochbohrung, die sich ausgehend von dem Einlass 7 - in axialer Richtung, das heißt entlang der Mittellinie 17 gesehen - bis vorzugsweise zu einer Stelle unterhalb des Ankers 73 erstreckt, wobei die axiale Sacklochbohrung mit einer ebenfalls bevorzugt unterhalb des Ankers 73 angeordneten, radialen Querbohrung in Fluidverbindung ist, die ihrerseits in die Druckausgleichskammer 57 mündet. Eine Anordnung unterhalb des Ankers 73 bedeutet hier eine Anordnung auf einer Seite des Ankers 73, die dem Ventilsitz 23 - in Richtung der Mittellinie 17 gesehen - zugewandt ist. Der Anker 73 kann in diesem Fall ohne Durchbohrung ausgebildet sein, was dessen magnetische Eigenschaften verbessert.

Da das Druckausgleichselement 33 dichtend sowohl mit dem Ventilkörper 3 als auch mit der Ventileinrichtung 19 beziehungsweise dessen Grundkörper 29 gekoppelt ist, und weil das Druckausgleichselement 33 so ausgelegt ist, dass das durch den Einlass 7 in das Ventil 1 eintretende Medium nicht durch dieses hindurchtreten kann, kann das oberhalb des Druckausgleichselements 33 vorhandene Medium nicht bis zur Ventilkammer 5 gelangen, welche unterhalb des Druckausgleichselements 33 angeordnet ist. Auf diese Weise wird in der ersten Funktionsstellung letztlich der Einlass 7 von der Ventilkammer 5 abgegrenzt.

Die hier beschriebene Ausgestaltung des Ventils 1 erlaubt einen Druckausgleich. Der Druck in dem mindestens einen Einlass 7 wirkt von unten auf die Ventileinrichtung 19, wobei die wirksame Fläche, auf welche der Druck im Einlass 7 wirkt, durch den Innendurchmesser des vorzugsweise zylindrisch ausgebildeten Fortsatzes 15 definiert wird und durch den Durchmesser des Ventilsitzes 23. Dieser Durchmesser wird auch als Nennweite bezeichnet. Der im Einlass 7 gegebene Druck wirkt über den Fluidpfad 83 auch in der Druckausgleichskammer 57 und wegen mindestens einer Öffnung in dem Vorspannelement 63 in dem Bereich unterhalb dieses Vorspannelements 63. Dieser Druck wirkt von oben auch auf das Druckausgleichselement 33, welches innen nahe der Mittellinie 17 an der Ventileinrichtung 19 festgespannt ist und außen an der Innenfläche 55 der Wand 11 des Ventilkörpers 3. Das Druckausgleichselement 33 ist in seinem radial äußeren Bereich mit mindestens einem Ring, hier mit dem Oberring 49 und dem Unterring 51, verbunden, welche derart stabil ausgelegt sind, dass sie die durch den Druck in der Druckausgleichskammer 57 wirkenden Kräfte an die Wand 11 des Ventilkörpers 3 weiterleiten.

Das Druckausgleichselement 33 ist, auch wenn nur ein einziger Ring vorgesehen ist, derart fest mit diesem Ring verbunden, dass der in der Druckausgleichskammer 57 und in dem Bereich unterhalb des Vorspannelements 63 wirkende Druck das Druckausgleichselement 33 nicht nach unten auslenkt.

Der mindestens eine Ring, hier die beiden Ringe 49 und 51, weisen einen Innendurchmesser auf, der derartig gewählt ist, dass die Innenfläche des mindestens einen Rings, hier der Ringe 49 und 51, nicht die Ventileinrichtung 19 berührt. Es bleibt also ein freier Ringbereich 53 des Druckausgleichselements 33 zwischen dem Innendurchmesser des mindestens einen Rings, hier des Oberrings 49 und des Unterrings 51 und dem Grundkörper 29 der Ventileinrichtung 19 sowie der Außenfläche des Zwischenrings 41. Die auf diesen freien Ringbereich 53 wirkenden Druckkräfte resultieren in einer nach unten in Richtung auf den Ventilsitz 23 wirkenden Kraft, mit welcher die fest mit dem Druckausgleichselement 33 gekoppelte Ventileinrichtung 19 auf den Ventilsitz 23 gepresst wird.

Die Ventileinrichtung 19 überspannt den mindestens einen Einlass 7 und wird daher von unten mit einer auf dem Druck beruhenden Kraft beaufschlagt, welche grundsätzlich der durch das Vorspannelement 63 aufgebauten Vorspannkraft entgegenwirkt. Die von unten wirkenden Kräfte sind abhängig von dem Innendurchmesser des Einlasses beziehungsweise des Ventilsitzes 23, also abhängig von der Nennweite des Einlasses 7.

Dadurch, dass der Druck im Einlass 7 über den Fluidpfad 83 nach oben in die Druckausgleichskammer 57 und damit von oben auf das Druckausgleichselement 33 wirken kann, werden über dieses Kräfte auf die Ventileinrichtung 19 ausgeübt, die von oben nach unten wirken. Diese sind also den Kräften entgegengerichtet, die durch den Druck im Einlass 7 von unten auf die Ventileinrichtung 19 wirken.

Durch diese einander entgegen wirkenden Kräfte kann ein Druckausgleich erreicht werden, sodass die Ventileinrichtung 19 mehr oder weniger unabhängig von dem Druck in dem mindestens einen Einlass 7 beziehungsweise in der Druckausgleichskammer 57 von den Vorspannkräften des Vorspannelements 63 gegen den Ventilsitz 23 angepresst wird. Dabei ist vorgesehen, dass die im Bereich des Einlasses 7 beziehungsweise Ventilsitzes 23 mit Druck beaufschlagte Fläche der Ventileinrichtung 19 im Wesentlichen der Fläche des freien Ringbereichs 53 entspricht, welcher in der Druckausgleichskammer 57 mit Druck von oben beaufschlagt wird.

Für den Druckausgleich wird also in erster Näherung dafür gesorgt, dass die hier genannten Flächen im Wesentlichen gleich groß sind. Dabei wirkt sich selbstverständlich auch die wirksame Fläche der Ventileinrichtung 19 aus, die von oben mit Druckkräften beaufschlagt wird.

Berücksichtigung findet in bevorzugter Weise auch noch folgender Gesichtspunkt: Bei einem weitgehenden Druckausgleich wird, wie oben gesagt, die Ventileinrichtung 19 mit der Kraft des Vorspannelements gegen den Ventilsitz 23 gedrückt, also in ihre erste Funktionsstellung. Steigt der Druck in dem mindestens einen Einlass 7, so erhöhen sich auch die Kräfte, die grundsätzlich der Vorspannkraft entgegenwirken würden. Durch den Druckausgleich wirken, wie gesagt, von oben ebenfalls Kräfte, die ein Abheben vom Ventilsitz 23 vermeiden.

Die Kräfte, welche von dem Antrieb 21 auf die Ventileinrichtung 19 einwirken müssen, um diese gegen die Vorspannkraft des Vorspannelements 63 abzuheben, hängen auch von der Steifigkeit des Vorspannelements 63 ab. Je steifer dieses ist, umso größer müssen die Kräfte sein, die erforderlich sind, um das Vorspannelement 63 zu verformen, um die Ventileinrichtung 19 vom Ventilsitz 23 abzuheben. Dasselbe gilt für die Steifigkeit des Druckausgleichselements 33: Je steifer dieses ist, umso größer sind die von dem Antrieb 21 aufzubringenden Kräfte, um das Druckausgleichselement 33 zu verformen und die Ventileinrichtung 19 aus der ersten Funktionsstellung heraus nach oben zu verlagern und von dem Ventilsitz 23 abzuheben.

Je größer die durch das Druckausgleichselement 33 und das Vorspannelement 63 wirkenden Kräfte sind, je größer also die Kräfte zur Verformung des Druckausgleichselements 33 und des Vorspannelements 63 beim Abheben der Ventileinrichtung 19 vom Ventilsitz 23 sind, umso kleiner kann die wirksame Fläche des Druckausgleichselements 33 gewählt werden, die von oben mit Druckkräften beaufschlagt wird. Wird also die Fläche des freien Ringbereichs 53 verkleinert, so werden die durch den Druck in der Druckausgleichskammer 57 aufgebauten und nach unten auf das Druckausgleichselement 33 wirkenden Kräfte vermindert, sodass der Antrieb 21 nicht so hohe Kräfte aufbringen muss, um die Ventileinrichtung 19 vom Ventilsitz 23 abzuheben.

Aufgrund dieser zusätzlichen Gegebenheiten wird ein Druckausgleich zunächst dadurch angestrebt, dass die oben genannten von oben und unten mit einer Druckkraft beaufschlagten Flächen im Wesentlichen gleich groß sind. Der Ringbereich 53 kann gegenüber dieser Ausgangslage verkleinert werden, um den Kräften Rechnung zu tragen, welche der Antrieb 21 beim Abheben der Ventileinrichtung 19 und beim Verformen des Vorspannelements 63 beziehungsweise des Druckausgleichselements 33 aufbringen muss.

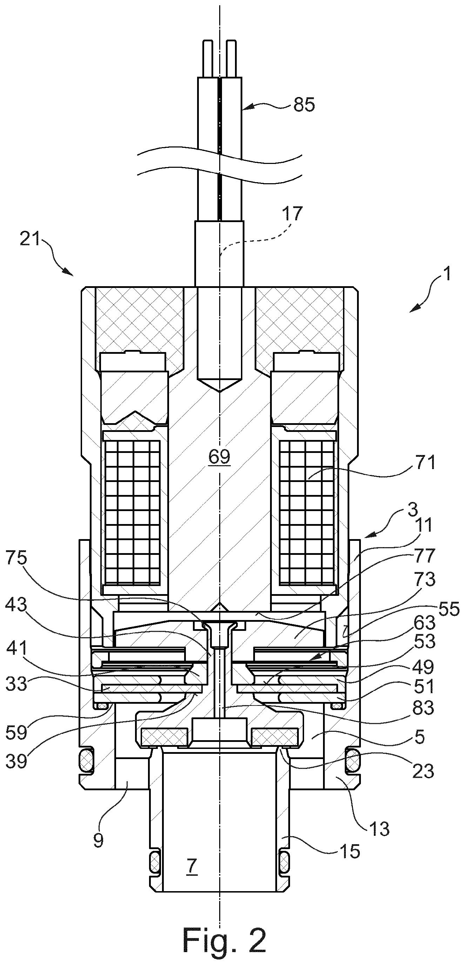

Figur 2 zeigt ein zweites Ausführungsbeispiel des Ventils 1 im Längsschnitt. Gleiche und funktionsgleiche Elemente sind mit gleichen Bezugszeichen versehen, sodass insofern auf die vorangegangene Beschreibung verwiesen wird.

Das Ventil 1 weist einen Ventilkörper 3 auf, welcher eine Ventilkammer 5 umschließt, in welche mindestens ein Einlass, hier ein Einlass 7, mündet. Er führt durch einen unten am Ventilkörper 3 von dessen Boden 13 entspringenden Fortsatz 15, welcher in einem Ventilsitz 23 endet, auf welchem eine Ventileinrichtung 19 mit einem Dichtelement 25 aufliegt. Von der Ventilkammer 5 geht mindestens ein Auslass 9 aus. Es können auch mehrere dieser Auslässe vorgesehen werden, die hier durch den Boden 13 durchdringende Bohrungen realisiert sind. Auch bei dem in Figur 2 dargestellten Ausführungsbeispiel kann der mindestens eine Auslass 9 auch so angelegt sein, dass er nicht durch den Boden 13, sondern seitlich durch die Wand 11 des Ventilkörpers 3 führt, also senkrecht zur gedachten Mittellinie des Ventils 1 verläuft. Vorzuziehen ist es aber bei diesem und bei allen anderen Ausführungsbeispielen, sowohl den mindestens einen Einlass 7 als auch den mindestens einen Auslass 9 auf der Unterseite des Ventilkörpers 3 vorzusehen. Es ist damit möglich, die Anschlüsse des Ventils 1 auf ein und derselben Seite vorzusehen und das Ventil 1 beispielsweise in den Grundkörper einer Fluideinrichtung dichtend einzustecken, um einen oder mehrere Ströme eines flüssigen oder gasförmigen Mediums in diesem Grundkörper zu beeinflussen.

An der Ventileinrichtung 19 ist ein Druckausgleichselement 33 mittels eines Zwischenrings 41 festgelegt, auf welchem ein mit mindestens einer Öffnung versehenes Vorspannelement 63 aufliegt. Dieses wird von oben von einem Betätigungselement festgespannt, welches mit einem Antrieb 21 zusammenwirkt. Hier ist dieser Antrieb 21 als Elektromagnet ausgebildet und weist einen Magnetkern 69 sowie eine Magnetspule 71 auf. Der Elektromagnet baut im bestromten Zustand eine auf das hier als Anker 73 ausgebildete Betätigungselement wirkende Anziehungskraft auf, sodass dieses gegen die Kraft des Vorspannelements 63 gemeinsam mit der Ventileinrichtung 19 gegen die Unterseite 77 des Magnetkerns 69 angezogen wird und damit eine zweite Funktionsstellung einnimmt. Figur 2 gibt eine erste Funktionsstellung wieder, wie sie anhand von Figur 1 erläutert wurde. In dieser ist die Fluidverbindung zwischen dem mindestens einen Einlass 7 und der Ventilkammer 5 unterbrochen, in der zweiten Funktionsstellung ist sie freigegeben.

Das Druckausgleichselement 33 ist mit seiner der Mittellinie 17 zugewandten Seite an dem Grundkörper 29 der Ventileinrichtung 19 festgeklemmt und mit seiner gegenüberliegenden Seite an der Innenfläche 55 der Wand 11 des Ventilkörpers 3.

Das Druckausgleichselement 33 ist, wie anhand des ersten Ausführungsbeispiels gemäß Figur 1 erläutert, ringförmig ausgebildet, sodass die ringförmige innere Begrenzungsseite die Innenseite des Druckausgleichselements 33 ist und der radial außen liegende Rand des Druckausgleichselements 33 dessen Außenseite.

Figur 2 zeigt ein zweites Ausführungsbeispiel eines Ventils 1 im Längsschnitt, wobei auch hier die Schnittebene so gelegt ist, dass die Mittelachse 17 in dieser angeordnet ist. Der Grundaufbau des Ventils 1 entspricht dem des Ventils 1 gemäß Figur 1. Gleiche und funktionsgleiche Teile sind mit gleichen Bezugsziffern versehen. Insofern wird auf die Beschreibung zur Figur 1 verwiesen. Auch bezüglich einzelner Elemente des in Figur 2 wiedergegebenen Ventils 1, die hier keine Bezugsziffern aufweisen, wird auf die in Figur 1 wiedergegebenen Bezugsziffern und die zugehörige Beschreibung verwiesen.

Auch bei dem in Figur 2 dargestellten Ausführungsbeispiel wird das Druckausgleichselement 33 durch mindestens einen Ring, der gegen die Innenfläche 55 verspannt ist, gehalten. Hier ist ein Oberring 49 vorgesehen, der in seinem der Mittellinie 17 abgewandten Bereich einen zylindrischen Randabschnitt aufweist, welcher um den ansonsten plattenförmigen, ringförmigen Grundkörper des Oberrings 49 umläuft. Es ergibt sich damit, im Querschnitt gesehen, ein quasi L-förmiger Querschnitt. Der Oberring 49 umschließt den äußeren Rand des Druckausgleichselements 33 und liegt auf dem Unterring 51 auf. Der plattenförmige, ringförmige Grundkörper des Oberrings 49 liegt oben auf dem Druckausgleichselement 33 auf; der Unterring 51 ist unterhalb des Druckausgleichselements 33. Er liegt also zwischen den beiden Ringen 49, 51.

Beide Ringe liegen gemeinsam mit dem Druckausgleichselement 33 auf einer Auflagefläche 59 auf. Da der Außendurchmesser der beiden Ringe 49 und 51 gleich groß ist, bedarf es bei dem Ausführungsbeispiel nach Figur 2 lediglich einer einzigen Auflagefläche 59, um beide Ringe und das zwischen diesen liegende Druckausgleichselement 33 festzuspannen.

Dies ist der einzige Unterschied zwischen den beiden in den Figuren 1 und 2 dargestellten Ausführungsbeispielen. Während bei dem ersten Ausführungsbeispiel zwei flache Ringe 49 und 51 vorgesehen sind, die unterschiedliche Außendurchmesser aufweisen, haben die beiden Ringe 49 und 51 bei dem zweiten Ausführungsbeispiel gemäß Figur 2 denselben Außendurchmesser, wobei der Oberring 49 das Druckausgleichselement 33 auch an dessen äußeren Rand umgreift.

Beiden Ausführungsbeispielen ist gemeinsam, dass die beiden Ringe 49 und 51 denselben Innendurchmesser aufweisen und derart ausgelegt sind, dass sie den Grundkörper 29 der Ventileinrichtung 19 nicht berühren. Es wird dadurch ein freier Ringbereich 53 des Druckausgleichselements 33 geschaffen, der weder von einem Oberring 49 und einem Unterring 51 noch von dem Grundkörper 29 gehalten wird. Dieser freie Ringbereich 53 wird, wie bei dem Ausführungsbeispiel nach Figur 1, von dem im Einlass 7 herrschenden Druck beaufschlagt. Dazu weist auch hier der Grundkörper 29 der Ventileinrichtung 19 einen Fluidpfad 83 auf, der bei beiden Ausführungsbeispielen konzentrisch zur Mittellinie 17 angeordnet ist.

Es ist aber auch möglich, dass der Oberring 49 und der Unterring 51 verschiedene Innendurchmesser aufweisen. Insbesondere ist es möglich, dass der Unterring 51 einen größeren Innendurchmesser aufweist als der Oberring 49.

Auch hier ist die Ventileinrichtung 19 als Niet ausgebildet und weist einen zylindrischen Fortsatz 43 mit einem oberen Endbereich 75 auf, der, von der Mittellinie 17 aus gesehen, nach außen aufgeweitet ist und das als Anker 73 ausgebildete Betätigungselement fest mit dem Grundkörper 29 der Ventileinrichtung 19 verbindet. Dadurch wirken nach oben gerichtete Kräfte, die von einem Antrieb 21 auf das Betätigungselement beziehungsweise den Anker 73 ausgeübt werden, auch auf den Grundkörper 29, sodass dieser vom Ventilsitz 23 abgehoben wird.

Figur 2 zeigt hier noch eine elektrische Zuleitung 85, über welche der Elektromagnet bei Bedarf mit Strom versorgt wird, sodass dieser den Anker 73 anzieht.

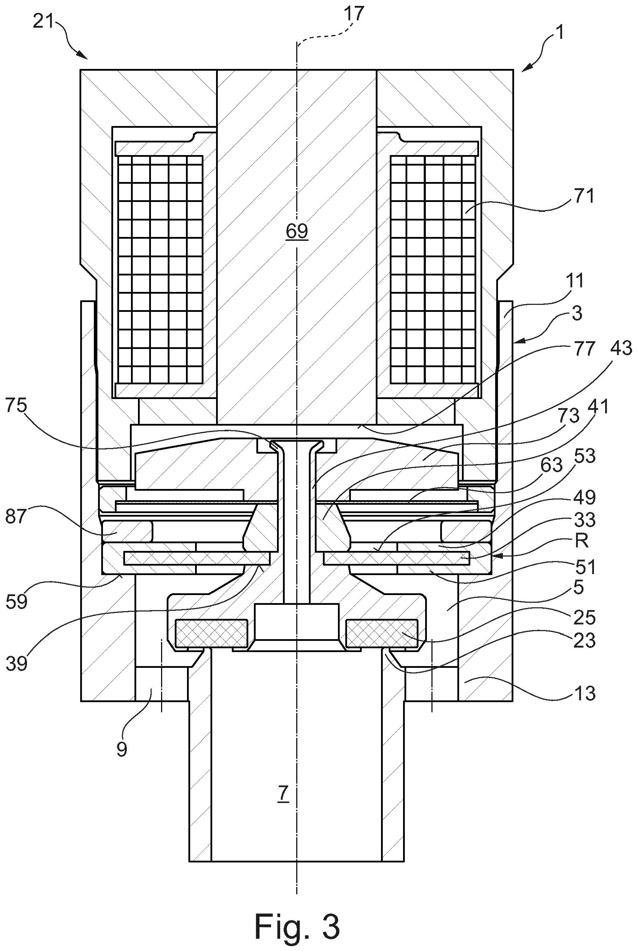

Figur 3 zeigt schließlich ein drittes Ausführungsbeispiel eines Ventils 1, dessen Grundaufbau dem entspricht, wie er anhand der beiden Ausführungsbeispiele gemäß Figur 1 und 2 entspricht.

Gleiche und funktionsgleiche Elemente sind mit gleichen Bezugszeichen versehen, sodass insofern auf die vorangegangene Beschreibung verwiesen wird.

Das in Figur 3 dargestellte und im Längsschnitt wiedergegebene dritte Ausführungsbeispiel des Ventils 1 weist wiederum einen Ventilkörper 3 mit einer Wand 11 auf, die eine Ventilkammer 5 seitlich umschließt, in welche mindestens ein, hier ein Einlass 7 mündet, und von der mindestens ein Auslass 9 ausgeht, der durch den Boden 13 des Ventilkörpers 3 hindurchführt.

In die Ventilkammer 5 ist von oben eine Ventileinrichtung 19 eingesetzt, die als Baueinheit ausgebildet ist, wie dies auch bei den beiden oben beschriebenen Ausführungen der Fall ist. An der Ventileinrichtung 19 sind außer einem Dichtelement 25 ein Druckausgleichselement 33 mittels eines Zwischenrings 41, ein Vorspannelement 63 sowie ein Betätigungselement angebracht, welches hier als Anker 73 ausgebildet ist. Entsprechend ist der Antrieb 21 als Elektromagnet mit einem Magnetkern 69 mit einer Magnetspule 71 ausgebildet. Die Ventileinrichtung 19 beziehungsweise deren Grundkörper 29 ist auch hier als Niet ausgebildet und weist einen zylindrischen Fortsatz 43 auf, auf den das Druckausgleichselement 33, der Zwischenring 41, das mindestens eine Öffnung aufweisende Vorspannelement 63 sowie der Anker 73 aufgesetzt und durch den aufgeweiteten oberen Endbereich 75 festgespannt sind.

Das Druckausgleichselement 33 ist mittels des Zwischenrings 41, wie in den Figuren 1 und 2 erläutert, am Grundkörper 29 der Ventileinrichtung 19 dichtend festgelegt und mit seinem äußeren Randbereich an der Innenfläche 55 der Wand 11 des Ventilkörpers 3. Am äußeren Rand des Druckausgleichselements 33 ist hier ein Ring R vorgesehen, der mit seiner Außenseite an der Innenfläche 55 anliegt, und der in dem hier vorliegenden Längsschnitt gesehen, U-förmig ausgestaltet ist. Er weist also zwei Schenkel auf, die quasi einen Oberring 49 und einen Unterring 51 realisieren, wobei hier die beiden Ringe 49 und 51 außen miteinander verbunden sind. Der Innendurchmesser der beiden Schenkel ist gleich groß und so ausgebildet, dass der innere Rand des Rings in einem Abstand zum Grundkörper 29 beziehungsweise zum Zwischenring 41 angeordnet ist. Es wird damit auch hier ein freier Ringbereich 53 des Druckausgleichselements 33 realisiert, der von oben, also von der Druckausgleichskammer 57 aus, mit einem Druck beaufschlagt wird, welcher über den in Richtung der Mittellinie 17 verlaufenden Fluidpfad 83, welcher den Grundkörper 29 durchdringt, in dem in dem mindestens einen Einlass 7 herrscht.

Es ist auch möglich, dass die Innendurchmesser der beiden Schenkel verschieden groß sind, wobei insbesondere der Innendurchmesser des unteren Schenkels, das heißt des Unterrings 51, größer sein kann als der Innendurchmesser des oberen Schenkels, also des Oberrings 49.

Der das Druckausgleichselement 33 im Bereich seines äußeren Randes an der Innenfläche 55 festlegende Ring R kann - wie auch bei den übrigen Ausführungsbeispielen - aufgrund seiner Eigenelastizität an der Innenfläche festgespannt werden, während er auf der Auflagefläche 59 aufliegt. Er kann auch ein Außengewinde aufweisen und in ein innen an der Wand 11 vorgesehenes Innengewinde eingeschraubt werden. Dies gilt für alle Ausführungsbeispiele. Bei dem hier dargestellten Ausführungsbeispiel ist vorgesehen, dass dieser Ring R und damit der äußere Rand des Druckausgleichselements 33 durch einen zusätzlichen Spannring 87, der ebenfalls an der Innenfläche 55 unter einer Vorspannung anliegt oder dort eingeschraubt ist, festgehalten wird, und zwar vorzugsweise derart, dass er das Druckausgleichselement 33 mit dem Ring R an die Anlagefläche 59 anpresst.

Ein Spannring 87 der hier angesprochenen Art kann auch bei dem ersten und zweiten Ausführungsbeispiel vorgesehen werden, um das Druckausgleichselement 33 und den mindestens einen Ring, hier den Oberring 49 und den Unterring 51, im Inneren des Ventilkörpers 3 dichtend festzulegen. Ein derartiger Spannring 87 ist allerdings in den Figuren 1 und 2 nicht dargestellt.

Das in den Figuren 1 bis 3 dargestellte Ventil 1 ist vorzugsweise als druckausgeglichenes Proportionalventil ausgelegt. Es ermöglicht damit einen proportionalen Durchfluss eines Mediums über den Einlass 7, die Ventilkammer 5 zu dem mindestens einen Auslass 9. Im stromlosen Zustand befindet sich die Ventileinrichtung 19 in der in den Figuren 1 bis 3 dargestellten ersten Funktionsstellung, in welcher der Grundkörper 29 durch das Vorspannelement 63 gegen den Ventilsitz 23 angepresst wird, wobei vorzugsweise am unteren Ende des Grundkörpers 29 ein Dichtelement 25 vorgesehen ist, welches an dem Grundkörper 29 festgebördelt ist.

Wird ein Steuersignal an den als Elektromagnet ausgebildeten Antrieb 21 geleitet, so entsteht durch die Magnetspule ein Magnetfeld proportional zum Steuersignal, welches eine Kraftwirkung auf den Anker 73 ausübt und diesen in Richtung auf die Unterseite 77 des Magnetkerns 69 anzieht. Ist die Vorspannungskraft des Vorspannelements 63 überwunden, so hebt das Dichtelement 25 vom Ventilsitz 23 ab, sodass eine Fluidverbindung zwischen dem mindestens einen Einlass 7 und der Ventilkammer 5 geschaffen wird. Der Hub der Ventileinrichtung 19 gegenüber dem Ventilsitz 23 und damit der Durchfluss durch das Ventil 1, hängen dabei von der Größe der Magnetkraft ab, damit auch von der Stärke des Steuersignals.

Definiert sind zwei Positionen der Ventileinrichtung 19, nämlich die erste Funktionsstellung, in welcher der mindestens eine Einlass gegenüber der Ventilkammer 5 abgeschlossen ist. Diese Funktionsstelllung ist in den Figuren 1 bis 3 dargestellt: Die Ventileinrichtung 19 liegt mit ihrer Dichtfläche 31 auf dem Ventilsitz 23 auf.

In der zweiten Funktionsstellung ist die Ventileinrichtung 19 vollständig von dem Ventilsitz 23 abgehoben und liegt an der Unterseite 77 des Magnetkerns 69 an. Durch ein entsprechendes Steuersignal, also einen durch die Magnetspule 71 geleiteten Strom, kann eine derartige Kraft auf den Anker 73 ausgeübt werden, dass er verschiedene Zwischenstellungen zwischen der ersten und zweiten Funktionsstellung einnehmen kann, sodass verschiedene Durchflussraten durch das Ventil 1 realisiert werden können.

Allen in den Figuren 1 bis 3 dargestellten Ausführungsbeispielen des Ventils 1 ist folgendes Grundprinzip gemeinsam:
Befindet sich die Ventileinrichtung 19 in der in den Figuren 1 bis 3 dargestellten ersten Funktionsstellung, so wird es von dem Vorspannelement 63 gegen den Ventilsitz 23 mit einer Vorspannkraft dichtend angepresst. Ein in dem mindestens einen Einlass 7 herrschender Druck wirkt auch in dem den Grundkörper 29 der Ventileinrichtung 19 durchlaufenden Fluidpfad 83, der zum einen mit dem mindestens einen Einlass 7 und zum anderen mit der Druckausgleichskammer 57 in Fluidverbindung steht. In dieser liegt daher auch der in dem mindestens einen Einlass 7 herrschende Druck an. Dieser Druck wirkt auch unterhalb des Vorspannelements 63, weil diese mindestens eine Öffnung aufweist, die in den Figuren 1 bis 3 nicht dargestellt ist. Der in dem mindestens einen Einlass 7 und in der Druckausgleichskammer 57 herrschende Druck wirkt damit über die genannte mindestens eine Öffnung von oben auf das Druckausgleichselement 33 und dessen freien Ringbereich 53. In seinem der Mittellinie 17 abgewandten äußeren Bereich ist das Druckausgleichselement mittels einer Verstärkung oder vorzugsweise mittels mindestens einen Rings am Ventilkörper 3, insbesondere an der Innenfläche 55 der Wand 11 des Ventilkörpers 3 dichtend festgelegt. Durch die Unterstützung des Druckausgleichselements 33 durch den mindestens einen Ring bewirkt der von oben auf das Druckausgleichselement 33 wirkende Druck hier keine Auslenkung desselben nach unten.

Das elastische Druckausgleichselement 33 ist auch, wie erwähnt, dichtend mit dem Grundkörper 29 der Ventileinrichtung 19 gekoppelt, nämlich mittels eines Zwischenrings 41 festgespannt. In dem Spannbereich kann der unterhalb des Vorspannelements 63 wirkende Druck das Druckausgleichselement 33 ebenfalls nicht auslenken. Dies ist ausschließlich in dem freien Ringbereich 53 möglich, der von unten, also auf der der Ventilkammer 5 zugewandten Seite, nicht abgestützt ist. Der freie Ringbereich 53 kann also durch den in dem mindestens einen Einlass 7 herrschenden und von oben auf den freien Ringbereich 53 wirkenden Druck nach unten derart ausgelenkt werden, dass über den Einspannbereich am Grundkörper 29 eine nach unten gerichtete Kraft auf die Ventileinrichtung 19 ausgeübt wird. Diese Kraft ist umso größer, je größer der freie Ringbereich 53 ist.

Die Größe des freien Ringbereichs 53, also die von oben mit einer Druckkraft beaufschlagte Fläche, kann dadurch variiert werden, dass der Innendurchmesser des mindestens einen Rings, welcher das Druckausgleichselement 33 in seinem äußeren Bereich stützt, größer oder kleiner ausgelegt wird, sodass der Abstand der Innenseite des mindestens einen Rings zum Grundkörper 29 der Ventileinrichtung 19 ebenfalls größer oder kleiner wird. Eine Beeinflussung der von dem Druck beaufschlagten Fläche des Druckausgleichselements 33, also des freien Ringbereichs 53, kann auch dadurch beeinflusst werden, dass der Außendurchmesser des Grundkörpers 29 sowie der des Zwischenrings 41 verkleinert wird, welcher das Druckausgleichselement 33 an der Ventileinrichtung festspannt.

Nach allem ist festzustellen, dass der den Ventilsitz 23 überspannende Bereich der Ventileinrichtung 19 abhängig von der Innenfläche des Ventilsitzes 23 beziehungsweise von dessen Innendurchmesser durch den Druck im Einlass 7 einer mehr oder weniger nach oben gerichteten Kraft ausgesetzt ist. Durch den über den Fluidpfad 83 gegebenen Druckausgleich wirkt, wie gesagt, der in dem mindestens einen Einlass 7 herrschende Druck auch von oben auf den freien Ringbereich 53. Grundsätzlich ist vorgesehen, dass die von unten mit einem Druck beaufschlagte Fläche im Wesentlichen der entspricht, die durch die Fläche des freien Ringbereichs 53 definiert wird.

Der auf diese Weise erzielte Druckausgleich ermöglicht es, dass größere Nennweiten, also ein größerer Innendurchmesser des mindestens einen Einlasses 7 und des Ventilsitzes 23 möglich sind, damit auch größere Volumenströme. Auch bei einem größeren Innendurchmesser des Ventilsitzes 23, also bei einer größeren Nennweite, müssen die von dem Vorspannelement 63 aufgebrachten Vorspannkräfte, welche die Ventileinrichtung 19 in die in den Figuren 1 bis 3 dargestellte erste Funktionsstellung anpressen, nicht oder nicht wesentlich größer werden. Die zum Abheben der Ventileinrichtung 19 vom Ventilsitz 23 erforderlichen Kräfte sind also durch den Druckausgleich praktisch unabhängig von der Nennweite des Einlasses 7.

Ein hier gewünschter Druckausgleich kann, wie sich aus den Erläuterungen zu den Figuren 1 bis 3 ergibt, unabhängig davon erreicht werden, wie das Druckausgleichselement 33 an der Innenfläche 55 der Wand 11 des Ventilkörpers 3 festgelegt wird. Es ist also möglich, das Druckausgleichselement 33 in seinem Außenbereich verstärkt auszulegen, sodass dieser Bereich aufgrund seiner Eigenspannung dichtend an der Innenfläche 55 anliegt. Denkbar ist es aber auch, den der Mittellinie 17 abgewandten äußeren Bereich des Druckausgleichselements 33 durch mindestens einen Ring zu verstärken, wobei Ringe mit verschiedenen Außendurchmessern gemäß Figur 1 verwendet werden können oder aber unterschiedlich ausgestaltete Ringe, wie sie anhand von Figur 2 erläutert wurden. Schließlich ist auch ein Ring verwendbar, der im Schnitt gesehen im Wesentlichen U-förmig ausgebildet ist und zwei Schenkel aufweist, die einen Oberring 49 und einen Unterring 51 realisieren.

Schließlich spielt es für die Auslegung des Druckausgleichs keine Rolle, ob der Außenbereich des Druckausgleichselements 33, wie anhand von Figur 3 erläutert, nicht nur aufgrund seiner Eigenelastizität an der Innenfläche 55 festgespannt wird, oder ob noch ein Spannring 87 zum Festlegen des Druckausgleichselements 33 am Ventilkörper 3 verwendet wird, wie dies in Figur 3 gezeigt ist.

Es sei hier noch darauf hingewiesen, dass das Druckausgleichselement 33 auch im Bereich seines der Mittelachse 17 zugewandten Randes von mindestens einem Ring abgestützt werden kann. Es ist also möglich, bei der Festlegung des Druckausgleichselements mindestens einen Ring vorzusehen, wobei auch zwei Ringe gemäß den Figuren 1 und 2 sowie ein im Schnitt im Wesentlichen U-förmiger Ring bei der Festlegung am Grundkörper 29 der Ventileinrichtung 19 einsetzbar sind.

Umgekehrt kann das Druckausgleichselement 33 in seinem der Mittellinie 17 abgewandten äußeren Bereich unmittelbar zwischen einer Auflagefläche 59 und einem Spannring 87 dichtend festgelegt werden, also ohne den Einsatz von mindestens einem Ring, wie er anhand der Figuren 1 bis 3 erläutert wurde.

Für alle Ausführungsbeispiele ist es entscheidend, dass das elastische Druckausgleichselement 33 in seinem äußeren und inneren Bereich derart am Ventilkörper 3 beziehungsweise dem Grundkörper 29 der Ventileinrichtung 19 festgelegt wird, dass bei einer aufgrund eines Drucks von oben bewirkten Auslenkung des Druckausgleichselements 33 beziehungsweise eines freien Ringbereichs 53 desselben die mit dem Druck beaufschlagte Fläche des Druckausgleichselements 33 sich nur in vorbestimmter Weise ändert. Es kann in nicht zur Erfindung gehörender Weise-daher vorgesehen sein, dass, wie in den Figuren 1 bis 3 dargestellt, das Druckausgleichselement 33 an dem mindestens einen Ring derartig befestigt ist, dass es von diesem bei einer durch Druck bewirkten Auslenkung nicht von dem Ring abhebt, sodass im Auflagebereich kein Spalt entsteht, in den ein druckbeaufschlagtes Medium eindringt. Dies würde zu einer Vergrößerung der druckbeaufschlagten Fläche führen. Dies gilt auch bei der Verwendung zweier Ringe, zwischen denen das Druckausgleichselement 33 eingespannt ist. In allen Figuren ist ersichtlich, dass die beiden Ringe bei den dargestellten Ausführungsbeispielen denselben Innendurchmesser aufweisen, sodass die druckbeaufschlagte Fläche des Druckausgleichselements 33 beziehungsweise des freien Ringbereichs 53 sich bei einer Auslenkung nicht vergrößert. Dasselbe gilt auch für die Einspannung des Druckausgleichselements 33 an der Ventileinrichtung 19. Den Figuren ist zu entnehmen, dass der Außendurchmesser der am Grundkörper 29 gegebenen Auflagefläche 39 und der Außendurchmesser des Zwischenrings 41 gleich groß gewählt sind, sodass in dem Anlagebereich des Druckausgleichselements 33 an der Auflagefläche 39 sowie im Anlagebereich des Druckausgleichselements 33 an dem Zwischenring 41 kein Spalt entsteht, wenn das Druckausgleichselement 33 durch einen Druck in dem mindestens einen Einlass 7 - in den Figuren nach unten - ausgelenkt wird.

Diese nicht erfindungsgemäße Ausgestaltung stellt sicher, dass der von oben auf das Druckausgleichselement 33 beziehungsweise den freien Ringbereich 53 wirkende Druck die Größe des druckbeaufschlagten Bereichs des Druckausgleichselements 33 beziehungsweise des Ringbereichs 53 nicht verändert. Damit bleibt auch der Druckausgleich bei der Auslenkung erhalten. Es ist aber erfindungsgemäß gezielt eine Spaltbildung und Vergrößerung einer druckbeaufschlagten Fläche des Druckausgleichselements 33 - wie oben erläutert - vorgesehen. Den in den Figuren 1 bis 3 dargestellten Ausführungsbeispielen des Ventils liegt ein gemeinsamer Grundaufbau zugrunde:

Der Ventilkörper 3 ist als zylindrisches Element ausgebildet und weist einen Boden 13 auf, von dem eine vorzugsweise zylindrische Wand 11 entspringt und die sich konzentrisch, in den Figuren nach oben, vom Boden 13 aus zur Mittellinie 17 erstreckt.

Der Boden 13 weist einen zentralen Einlass 7 auf, der hier von einem Fortsatz 15 umgeben ist, welcher sich von dem Boden 13 nach unten konzentrisch zur Mittellinie 17 erstreckt. Vorzugsweise sind um den Einlass 7 herum in dem Boden 13 Öffnungen vorgesehen, die den mindestens einen Auslass 9 realisieren. Wie gesagt, wird die Anzahl der Auslässe 9, deren Querschnittsfäche und deren Querschnittsform so gewählt, dass sich ein gewünschter Medienbeziehungsweise Volumenstrom durch den Einlass 7 in die Ventilkammer 5 ergibt und von dieser durch die Auslässe 9.

In den von der Wand 11 umgebenen Raum kann von oben auf einfache Weise eine Ventileinrichtung 19 eingesetzt werden, wie sie oben beschrieben wurde und die vorzugsweise als Montage- oder Baueinheit ausgebildet ist. Auf diese Weise kann die Ventileinrichtung 19 einfach von oben in den von der Wand 11 umgebenen Raum eingesetzt beziehungsweise eingepresst werden. Der Antrieb 21 für die Ventileinrichtung 19 kann bei dieser Ausgestaltung ebenfalls von oben in den von der Wand 11 des Ventilkörpers 3 umschlossenen Raum eingesetzt werden. Für die Montage des Ventils 1 ist es also möglich, den Ventilkörper 3 einzuspannen und dann von oben, also an dem dem Boden 13 abgewandten freien Ende der Wand 11, sowohl die Ventileinrichtung 19 und den Antrieb 21 einzusetzen. Diese Einbaumethode ist besonders einfach und kostengünstig realisierbar. Auf diese Weise ist es auch möglich, bei einem eingebauten Ventil 1 den Ventilkörper in der Einbauposition zu belassen und die Ventileinrichtung 19 und/oder den Antrieb 21 auszutauschen.

Als günstig hat sich bei diesem Grundaufbau ebenfalls erwiesen, dass die Ein- und Auslässe 7 und 9 auf ein und derselben Seite des Ventils 1 liegen, nämlich im Bereich des Bodens 13. Das Ventil 1 kann also auf einfache Weise in den Grundkörper einer Fluideinrichtung eingesetzt werden, die von einem flüssigen oder gasförmigen Medium durchströmt wird. Durch eine entsprechende Ausgestaltung der Kanäle in der Fluideinrichtung können diese durch das Einstecken des Ventils 1 in den Grundkörper der Fluideinrichtung mit den Einlässen 7 und 9 des Ventils 1 druckdicht gekoppelt werden.

## Patentansprüche

1. Ventil für flüssige oder gasförmige Medien, mit
- einem Ventilkörper (3),
- der eine Ventilkammer (5) umfasst,
- welche mit mindestens einem Einlass (7) und mit wenigstens einem Auslass (9) in Fluidverbindung bringbar, mit
- einer in eine erste und zweite Funktionsstellung verlagerbare Ventileinrichtung (19),
- welche die Fluidverbindung zwischen dem mindestens einen Einlass (7) und der Ventilkammer (5) in der ersten Funktionsstellung unterbindet und in der zweiten Funktionsstellung freigibt, wobei
- die Ventileinrichtung (19) zum Verschließen des Einlasses (7) in der ersten Funktionsstellung ein gegen einen Ventilsitz (23) dichtend andrückbares Dichtelement (25) aufweist, mit
- einem Vorspannelement (63), welches mittels einer Vorspannkraft die Ventileinrichtung (19) in ihre erste Funktionsstellung drängt, mit
- einem mit der Ventileinrichtung (19) zusammenwirkenden Antrieb (21), welcher diese verlagert, und mit
- einem elastischen Druckausgleichselement (33), welches einerseits mit der Ventileinrichtung (19) und andererseits mit dem Ventilkörper (3) dichtend derart gekoppelt ist, dass es die Ventilkammer (5) gegen eine über einen Fluidpfad (83) mit dem mindestens einen Einlass (7) verbundene Druckausgleichskammer (57) abgrenzt, sodass
- das Druckausgleichselement (33) einerseits mit dem in der Druckausgleichskammer (57) und andererseits mit dem in dem wenigstens einen Auslass (9) herrschenden Druck beaufschlagbar ist, und dass
- die am Ventilsitz (23) mit dem im Einlass (7) herrschenden Druck beaufschlagte Fläche der Ventileinrichtung (19) im Wesentlichen der Fläche des Druckausgleichselements (33) entspricht, welche mit dem in der Druckausgleichskammer (57) herrschenden Druck beaufschlagt wird,
**dadurch gekennzeichnet, dass**
- das Druckausgleichselement (33) derart an der Ventileinrichtung (19) und/oder am Ventilkörper (3) festgelegt ist, dass sich die mit dem Druck der Druckausgleichskammer (57) und/oder der Ventilkammer (5) beaufschlagten Flächen des Druckausgleichselements (33) zumindest bei einer Verlagerung der Ventileinrichtung (19) von der zweiten Funktionsstellung in die erste Funktionsstellung so ändern, dass die mit dem Druck der Druckausgleichskammer (57) beaufschlagte Fläche größer wird als die mit dem Druck der Ventilkammer (5) beaufschlagte Fläche.

2. Ventil nach einem der vorhergehenden Ansprüche, **dadurch gekennzeichnet, dass** der Antrieb (21) mindestens einen Elektromagneten sowie wenigstens einen mit diesem zusammenwirkenden Anker (73) aufweist, welcher auf die Ventileinrichtung (19) einwirkt.

3. Ventil nach Anspruch 2, **dadurch gekennzeichnet, dass** der Anker (73) und damit die Ventileinrichtung (19) mittels des Elektromagneten gegen die Kraft des Vorspannelements (63) in zumindest die zweite Funktionsstellung verlagerbar ist.

4. Ventil nach einem der vorhergehenden Ansprüche, **dadurch gekennzeichnet, dass** das Druckausgleichselement (33) eine Membran aufweist oder als Membran ausgebildet ist.

5. Ventil nach einem der vorhergehenden Ansprüche, **dadurch gekennzeichnet, dass** das Druckausgleichselement (33) zumindest in dem Bereich, in dem es an dem Ventilkörper (3) und/oder an der Ventileinrichtung (19) festgelegt ist, eine Verstärkung oder mindestens einen Ring aufweist.

6. Ventil nach einem der vorhergehenden Ansprüche, **dadurch gekennzeichnet, dass** die Ventileinrichtung (19) einen Grundkörper (29) aufweist, an dem das Dichtelement (25) und/oder das Druckausgleichselement (33) und/oder das Vorspannelement (63) und/oder der Anker (73) anbringbar sind/ist.

7. Ventil nach Anspruch 6, **dadurch gekennzeichnet, dass** der Fluidpfad (83) zwischen dem mindestens einen Einlass (7) und der Druckausgleichskammer (57) durch den Grundkörper (29) der Ventileinrichtung (19) verläuft.

8. Ventil nach einem der vorhergehenden Ansprüche, **dadurch gekennzeichnet, dass** der Ventilkörper (3) einstückig ausgebildet ist.

9. Ventil nach einem der vorhergehenden Ansprüche, **dadurch gekennzeichnet, dass** es als Proportionalventil ausgebildet ist.

## Claims

1. A valve for liquid or gaseous media, comprising
- a valve body (3),
- which comprises a valve chamber (5),
- which can be brought into a fluid connection with at least one inlet (7) and with at least one outlet (9), comprising
- a valve device (19), which can be displaced into a first and a second functional position,
- which prevents the fluid connection between the at least one inlet (7) and the valve chamber (5) in the first functional position and releases it in the second functional position, wherein
- the valve device (19) has a sealing element (25), which can be pressed against a valve seat (23) so as to form a seal in order to close the inlet (7) in the first functional position, comprising
- a biasing element (63), which pushes the valve device (19) into its first functional position by means of a biasing force, comprising
- a drive (21), which cooperates with the valve device (19) and which displaces said valve device, and comprising
- an elastic pressure compensating element (33), which is coupled so as to form a seal to the valve device (19) on the one hand and to the valve body (3) on the other hand in such a way that it defines the valve chamber (5) against a pressure compensating chamber (57), which is connected to the at least one inlet (7) via a fluid path (83), so that
- the pressure prevailing in the pressure compensating chamber (57) on the one hand and the pressure prevailing in the at least one outlet (9) on the other hand can be applied to the pressure compensating element (33), and that
- the surface of the valve device (19), to which the pressure prevailing in the inlet (7) is applied at the valve seat (23), corresponds essentially to the surface of the pressure compensating element (33), to which the pressure prevailing in the pressure compensating chamber (57) is applied,
**characterised in that**
- the pressure compensating element (33) is secured to the valve device (19) and/or to the valve body (3) in such a way that the surfaces of the pressure compensating element (33), to which the pressure of the pressure compensating chamber (57) and/or of the valve chamber (5) is applied, change at least in response to a displacement of the valve device (19) from the second functional position into the first functional position in such a way that the surface, to which the pressure of the pressure compensating chamber (57) is applied, becomes larger than the surface, to which the pressure of the valve chamber (5) is applied.

2. The valve according to any one of the preceding claims, **characterised in that** the drive (21) has at least one electromagnet as well as at least one armature (73), which interacts with said electromagnet and which acts on the valve device (19).

3. The valve according to claim 2, **characterised in that** the armature (73) and thus the valve device (19) can be displaced into at least the second functional position by means of the electromagnet against the force of the biasing element (63).

4. The valve according to any one of the preceding claims, **characterised in that** the pressure compensating element (33) has a membrane or is embodied as membrane.

5. The valve according to any one of the preceding claims, **characterised in that** the pressure compensating element (33) has a reinforcement or at least one ring at least in that region, in which it is secured to the valve body (3) and/or to the valve device (19).

6. The valve according to any one of the preceding claims, **characterised in that** the valve device (19) has a base body (29), to which the sealing element (25) and/or the pressure compensating element (33) and/or the biasing element (63) and/or the armature (73) can be attached.

7. The valve according to claim 6, **characterised in that** the fluid path (83) between the at least one inlet (7) and the pressure compensating chamber (57) runs through the base body (29) of the valve device (19).

8. The valve according to any one of the preceding claims, **characterised in that** the valve body (3) is embodied in one piece.

9. The valve according to any one of the preceding claims, **characterised in that** it is embodied as proportional valve.

## Revendications

1. Soupape pour liquides ou fluides gazeux, avec
- un corps de soupape (3)
- qui comprend une chambre de soupape (5)
- pouvant être mis en liaison de fluide avec au moins une entrée (7) et au moins une sortie (9), avec
- un dispositif de soupape (19) déplaçable dans une première et une deuxième position fonctionnelle,
- qui empêche la liaison de fluide entre au moins une entrée (7) et la chambre de soupape (5) dans la première position fonctionnelle et la libère dans la deuxième position fonctionnelle,
- le dispositif de soupape (19) pour la fermeture de l'entrée (7) dans la première position fonctionnelle présentant un élément d'étanchéité (25) comprimable de façon étanche contre un siège de soupape (23), avec
- un élément de précontrainte (63) qui repousse le dispositif de soupape (19) dans sa première position fonctionnelle par une force de précontrainte, avec
- un entraînement (21) interagissant avec le dispositif de soupape (19) et déplaçant celui-ci, et avec
- un élément de compensation de pression (33) élastique qui est, d'une part, couplé de manière étanche avec le dispositif de soupape (19) et, d'autre part, avec le corps de soupape (3) de manière à délimiter la chambre de soupape (5) contre une chambre de compensation de pression (57) reliée au moins à une entrée (7) par un trajet de fluide (83), de façon à ce que
- l'élément de compensation de pression (33) puisse être alimenté, d'une part, avec la pression présente dans la chambre de compensation de pression (57) et, d'autre part, avec la pression présente au moins dans une sortie (9) et que
- la surface du dispositif de soupape (19), alimentée avec la pression présente dans l'entrée (7) sur le siège de soupape (23), corresponde essentiellement à la surface de l'élément de compensation de pression (33) qui est alimentée avec la pression présente dans la chambre de compensation de pression (57),
**caractérisée en ce que**
- l'élément de compensation de pression (33) est fixé sur le dispositif de soupape (19) et/ou sur le corps de soupape (3) de façon à ce que les surfaces de l'élément de compensation de pression (33), alimentées avec la pression de la chambre de compensation de pression (57) et/ou de la chambre de soupape (5) passent de la deuxième position fonctionnelle à la première position fonctionnelle lors d'un déplacement du dispositif de soupape (19) de manière à ce que la surface alimentée avec la pression de la chambre de compensation de pression (57) soit plus grande que la surface alimentée avec la pression de la chambre de soupape (5).

2. Soupape selon une des revendications précédentes, **caractérisée en ce que** l'entraînement (21) présente au moins un électroaimant et au moins un ancrage (73) interagissant avec celui-ci et agissant sur le dispositif de soupape (19).

3. Soupape selon la revendication 2, **caractérisée en ce que** l'ancrage (73) et, par conséquent, le dispositif de soupape (19) est déplaçable au moins dans la deuxième position fonctionnelle contre la force de l'élément de précontrainte (63) au moyen de l'électroaimant.

4. Soupape selon une des revendications précédentes, **caractérisée en ce que** l'élément de compensation de pression (33) présente une membrane ou est conçu sous forme de membrane.

5. Soupape selon une des revendications précédentes, **caractérisée en ce que** l'élément de compensation de pression (33) présente, au moins dans la zone dans laquelle il est fixé sur le corps de soupape (3) et/ou sur le dispositif de soupape (19), un renforcement ou au moins un anneau.

6. Soupape selon une des revendications précédentes, **caractérisée en ce que** le dispositif de soupape (19) présente un corps de base (29) sur lequel l'élément d'étanchéité (25) et/ou l'élément de compensation de pression (33) et/ou l'élément de précontrainte (63) et/ou l'ancrage (73) peuvent/peut être fixés.

7. Soupape selon la revendication 6, **caractérisée en ce que** le trajet du fluide (83) passe par le corps de base (29) du dispositif de soupape (19) entre au moins une entrée (7) et la chambre de compensation de pression (57).

8. Soupape selon une des revendications précédentes, **caractérisée en ce que** le corps de soupape (3) est conçu en une pièce.

9. Soupape selon une des revendications précédentes, **caractérisée en ce qu'**elle est conçue comme soupape proportionnelle.
